# EUROPEAN PATENT APPLICATION

(11) **EP 4 844 685 A1**
(43) Date of publication of application: **25.11.2026**
(21) Application number: 25741967.1
(22) Date of filing: 15.01.2025
(51) Int. Cl.: G06T 9/00

(54) **ENCODING METHOD, DECODING METHOD, ENCODING DEVICE, AND DECODING DEVICE**

(30) Priority: 17.01.2024 US 202463621777 P
(71) Applicant: Panasonic Intellectual Property Corporation of America, Torrance, CA 90504 (US)
(72) Inventor: SUGIO, Toshiyasu, Kadoma-shi, Osaka 571-0057 (JP); IGUCHI, Noritaka, Kadoma-shi, Osaka 571-0057 (JP); NISHI, Takahiro, Kadoma-shi, Osaka 571-0057 (JP); LIM, Chong Soon, Singapore 469332 (SG); WU, Zheng, Singapore 469332 (SG); TEO, Han Boon, Singapore 469332 (SG); LOI, Keng Liang, Singapore 469332 (SG); HAN, Chung Dean, Singapore 469332 (SG); DUMANOV, Farman, Singapore 469332 (SG); CHENG, Kian Soon, Singapore 469332 (SG); YADAV, Praveen Kumar, Singapore 469332 (SG)
(74) Representative: Grünecker Patent- und Rechtsanwälte PartG mbB
(86) International application number: PCT/JP2025/001038
(87) International publication number: WO 2025/154742

(57) **Abstract**

An encoding method includes: obtaining a plurality of vertices included in a three-dimensional mesh (S1561); generating a plurality of two-dimensional coordinates by projecting the plurality of vertices onto a two-dimensional plane (S1562); performing a two-dimensional transformation on the plurality of two-dimensional coordinates based on a parameter (S1563); and generating a bitstream including the parameter (S1564). The plurality of two-dimensional coordinates after the two-dimensional transformation are used for mapping a texture of the three-dimensional mesh.

## Description

### [Technical Field]

The present disclosure relates to, for example, an encoding method.

### [Background Art]

Patent Literature (PTL) 1 proposes a method and a device for encoding and decoding three-dimensional mesh data.

### [Citation List]

### [Patent Literature]

[PTL 1] Japanese Unexamined Patent Application Publication No. 2006-187015

### [Summary of Invention]

### [Technical Problem]

There is a demand for further improvement in an encoding or decoding process related to three-dimensional mesh. An object of the present disclosure is to improve the encoding or decoding process related to three-dimensional mesh.

### [Solution to Problem]

An encoding method according to one aspect of the present disclosure includes: obtaining a plurality of vertices included in a three-dimensional mesh; generating a plurality of two-dimensional coordinates by projecting the plurality of vertices onto a two-dimensional plane; performing a two-dimensional transformation on the plurality of two-dimensional coordinates based on a parameter; and generating a bitstream including the parameter. The plurality of two-dimensional coordinates after the two-dimensional transformation are used for mapping a texture of the three-dimensional mesh.

A decoding method according to one aspect of the present disclosure includes: obtaining a bitstream; obtaining, from the bitstream, a plurality of vertices included in a three-dimensional mesh and a parameter; generating a plurality of two-dimensional coordinates by projecting the plurality of vertices onto a two-dimensional plane; and performing a two-dimensional transformation on the plurality of two-dimensional coordinates based on the parameter. The plurality of two-dimensional coordinates after the two-dimensional transformation are used for mapping a texture to the three-dimensional mesh.

Note that these general or specific aspects may be implemented using a system, a device, an integrated circuit, a computer program, or a computer-readable recording medium such as a CD-ROM, or any combination of systems, devices, integrated circuits, computer programs, and recording media.

### [Advantageous Effects of Invention]

The present disclosure can contribute toward improving encoding processing related to three-dimensional mesh and the like.

### [Brief Description of Drawings]

[FIG. 1]

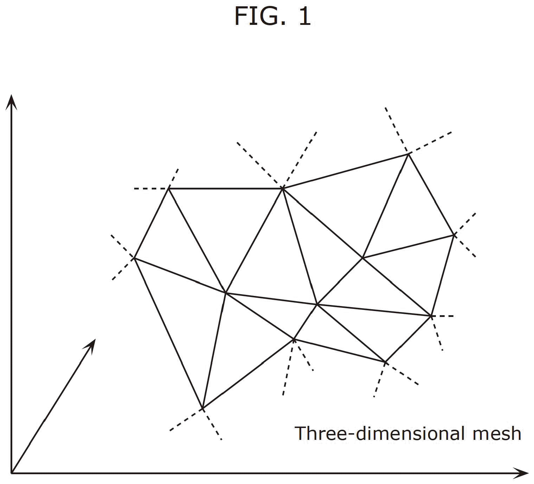

   FIG. 1 is a conceptual diagram illustrating a three-dimensional mesh according to an embodiment.
[FIG. 2]

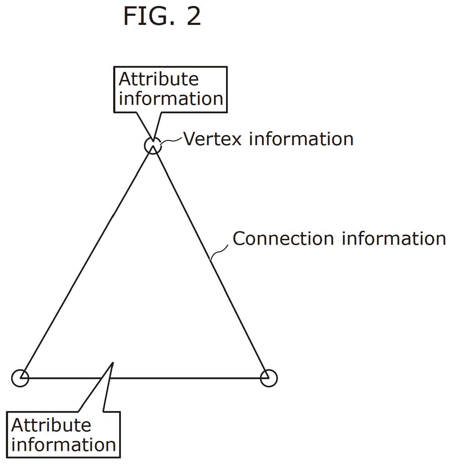

   FIG. 2 is a conceptual diagram illustrating basic elements of a three-dimensional mesh according to the embodiment.
[FIG. 3]

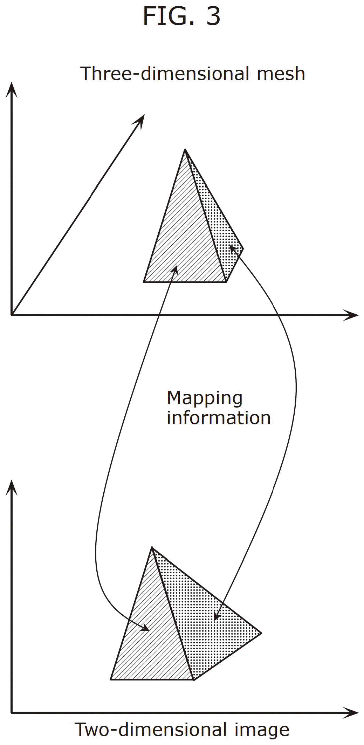

   FIG. 3 is a conceptual diagram illustrating mapping according to the embodiment.
[FIG. 4]

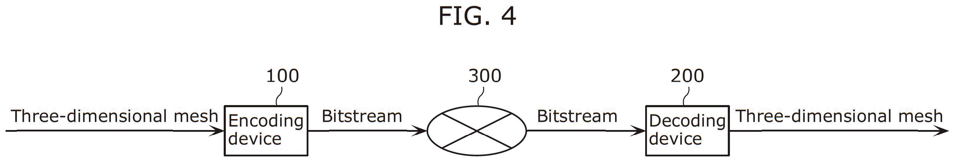

   FIG. 4 is a block diagram illustrating a configuration example of the encoding/decoding system according to the embodiment.
[FIG. 5]

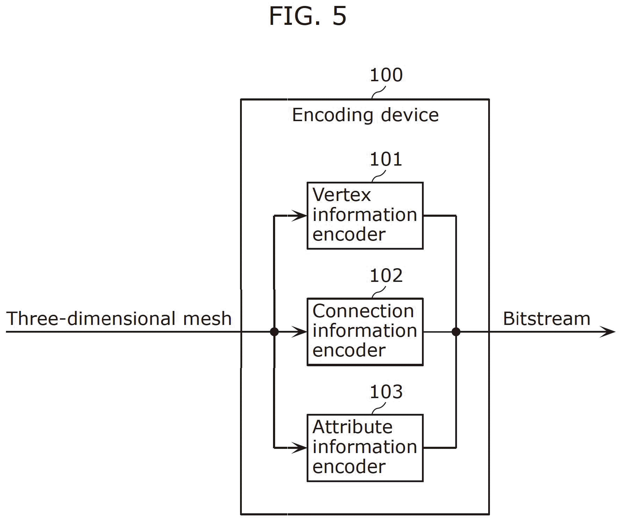

   FIG. 5 is a block diagram illustrating a configuration example of the encoding device according to the embodiment.
[FIG. 6]

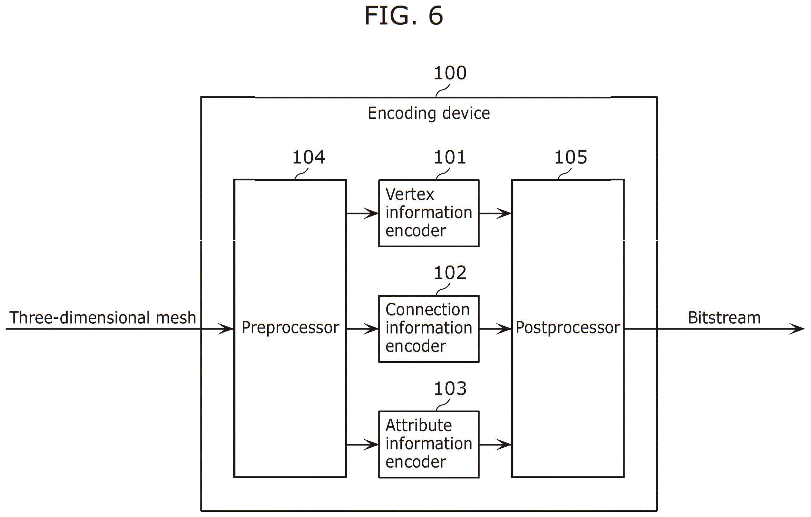

   FIG. 6 is a block diagram illustrating another configuration example of the encoding device according to the embodiment.
[FIG. 7]

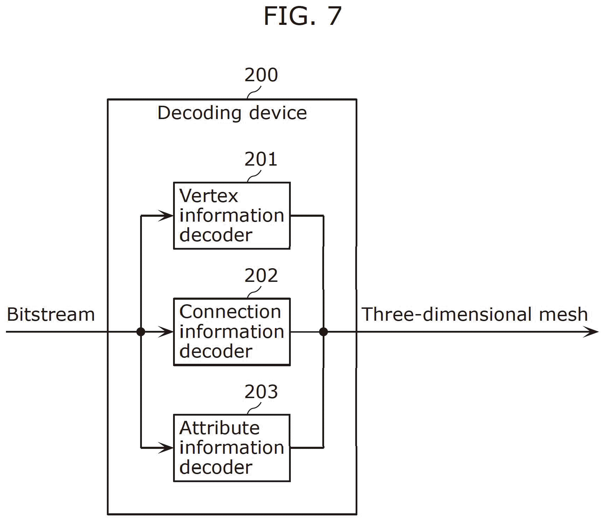

   FIG. 7 is a block diagram illustrating a configuration example of the decoding device according to the embodiment.
[FIG. 8]

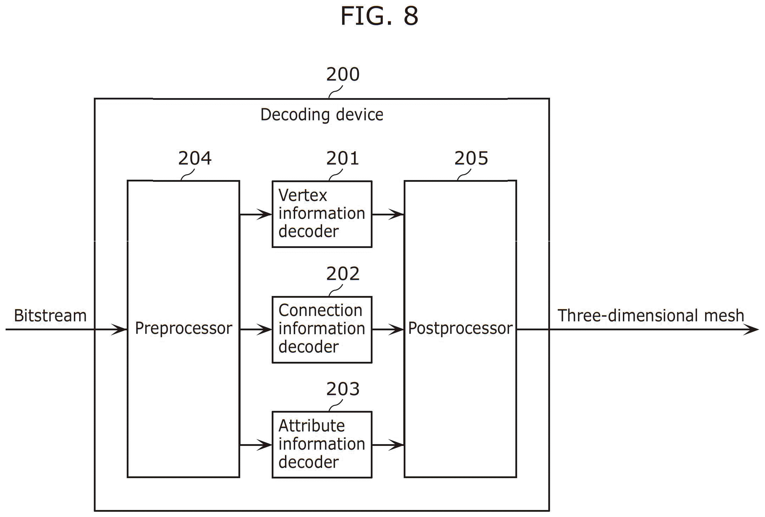

   FIG. 8 is a block diagram illustrating another configuration example of the decoding device according to the embodiment.
[FIG. 9]

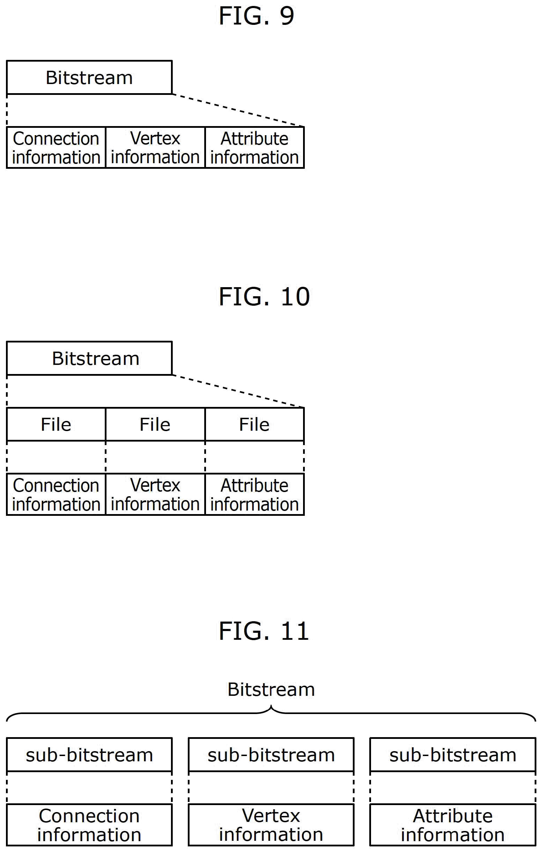

   FIG. 9 is a conceptual diagram illustrating a configuration example of a bitstream according to the embodiment.
[FIG. 10]
   FIG. 10 is a conceptual diagram illustrating another configuration example of a bitstream according to the embodiment.
[FIG. 11]
   FIG. 11 is a conceptual diagram illustrating yet another configuration example of a bitstream according to the embodiment.
[FIG. 12]

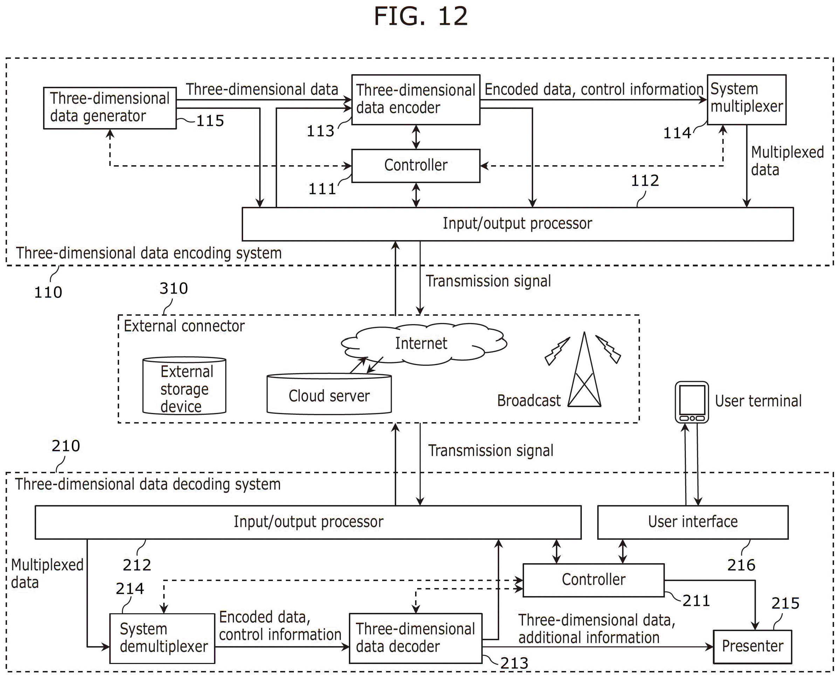

   FIG. 12 is a block diagram illustrating a specific example of the encoding/decoding system according to the embodiment.
[FIG. 13]

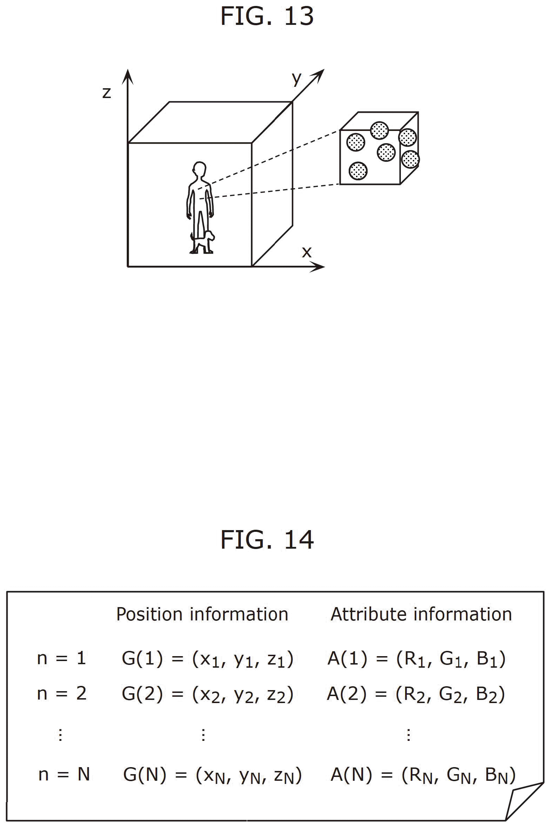

   FIG. 13 is a conceptual diagram illustrating a configuration example of point cloud data according to the embodiment.
[FIG. 14]
   FIG. 14 is a conceptual diagram illustrating a data file example of the point cloud data according to the embodiment.
[FIG. 15]

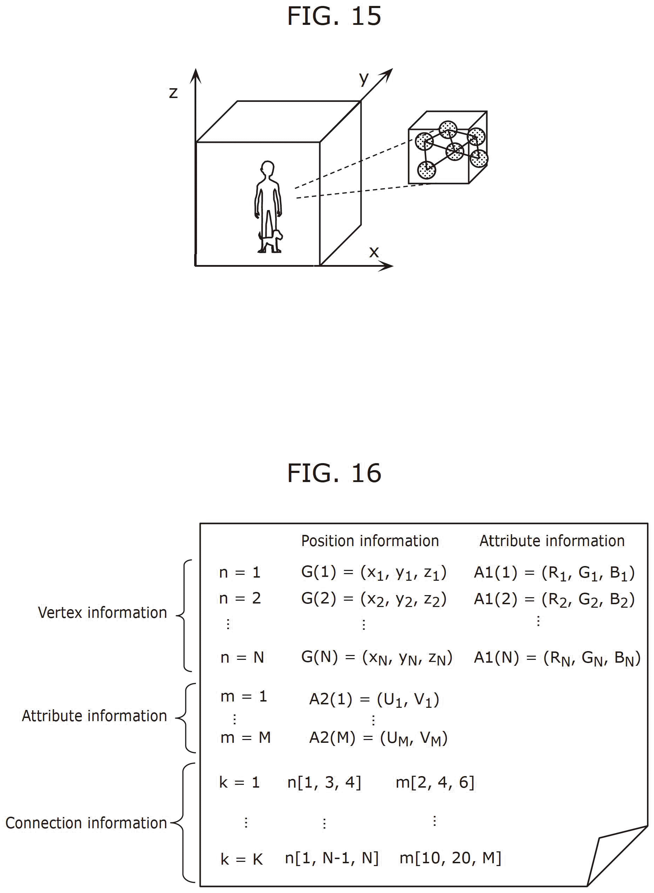

   FIG. 15 is a conceptual diagram illustrating a configuration example of mesh data according to the embodiment.
[FIG. 16]
   FIG. 16 is a conceptual diagram illustrating a data file example of the mesh data according to the embodiment.
[FIG. 17]

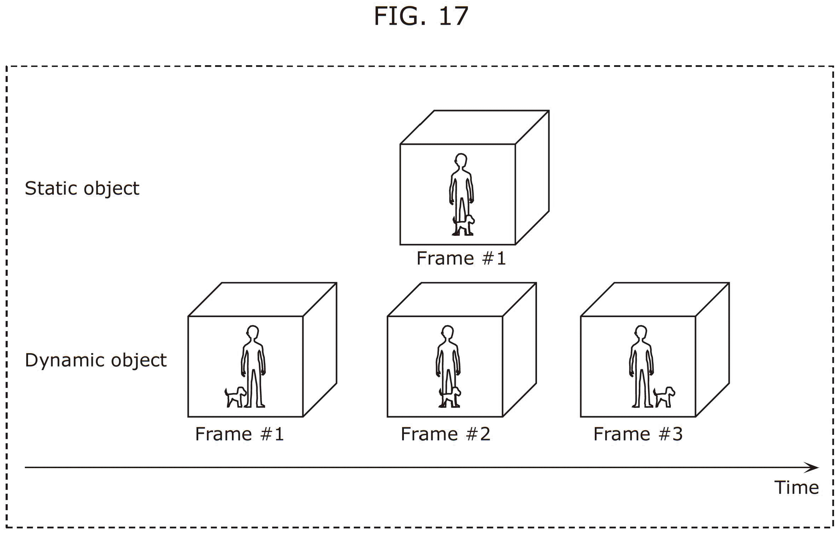

   FIG. 17 is a conceptual diagram illustrating a type of three-dimensional data according to the embodiment.
[FIG. 18]

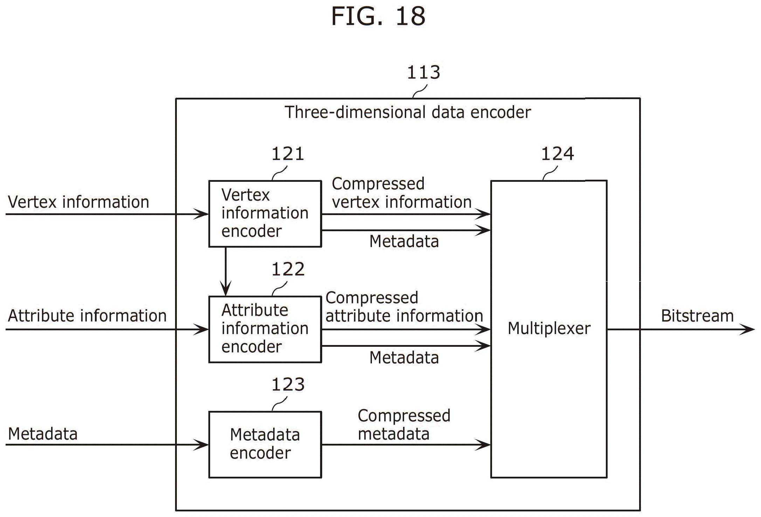

   FIG. 18 is a block diagram illustrating a configuration example of the three-dimensional data encoder according to the embodiment.
[FIG. 19]

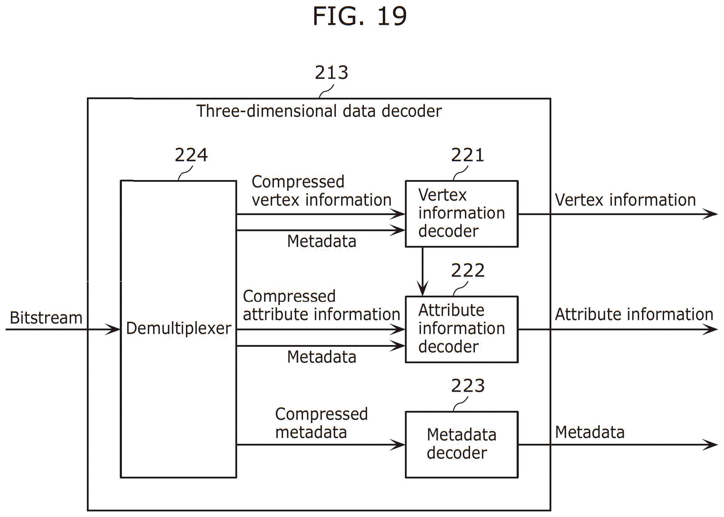

   FIG. 19 is a block diagram illustrating a configuration example of the three-dimensional data decoder according to the embodiment.
[FIG. 20]

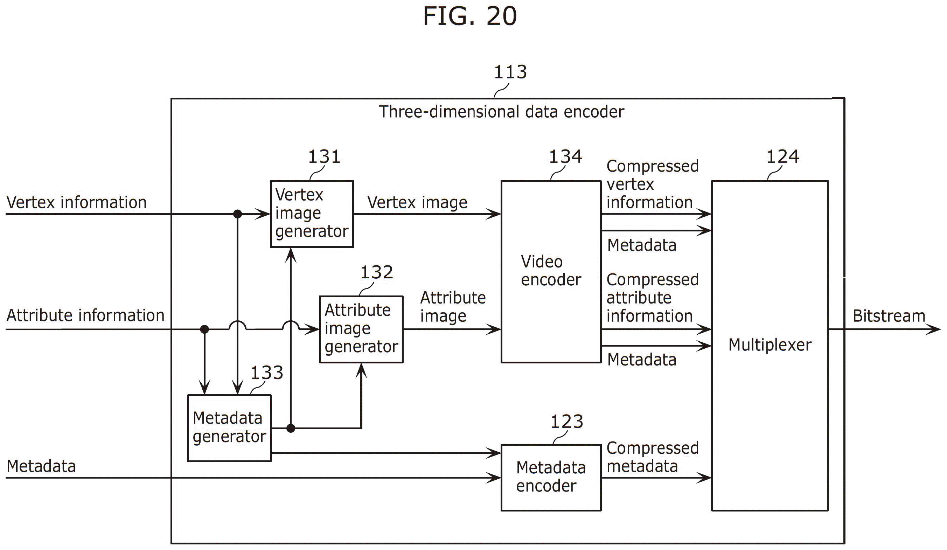

   FIG. 20 is a block diagram illustrating another configuration example of the three-dimensional data encoder according to the embodiment.
[FIG. 21]

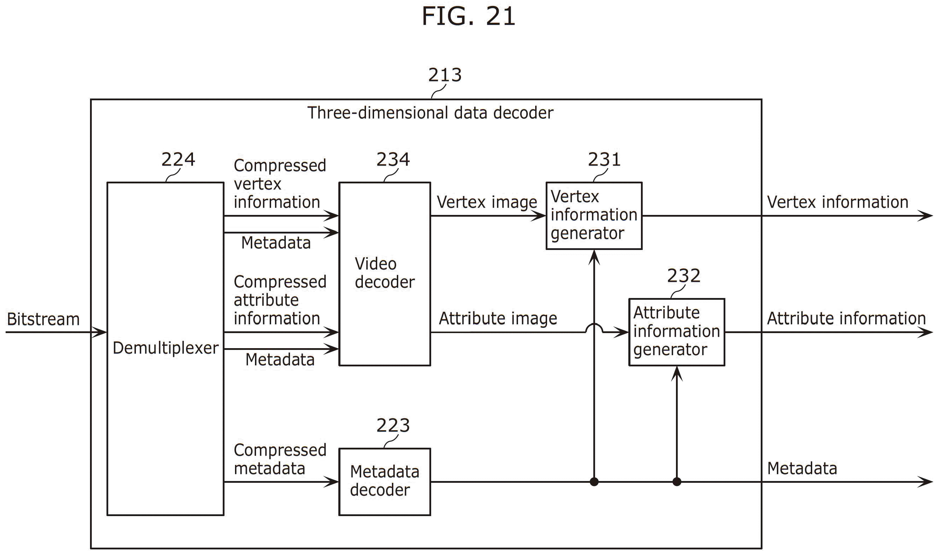

   FIG. 21 is a block diagram illustrating another configuration example of the three-dimensional data decoder according to the embodiment.
[FIG. 22]

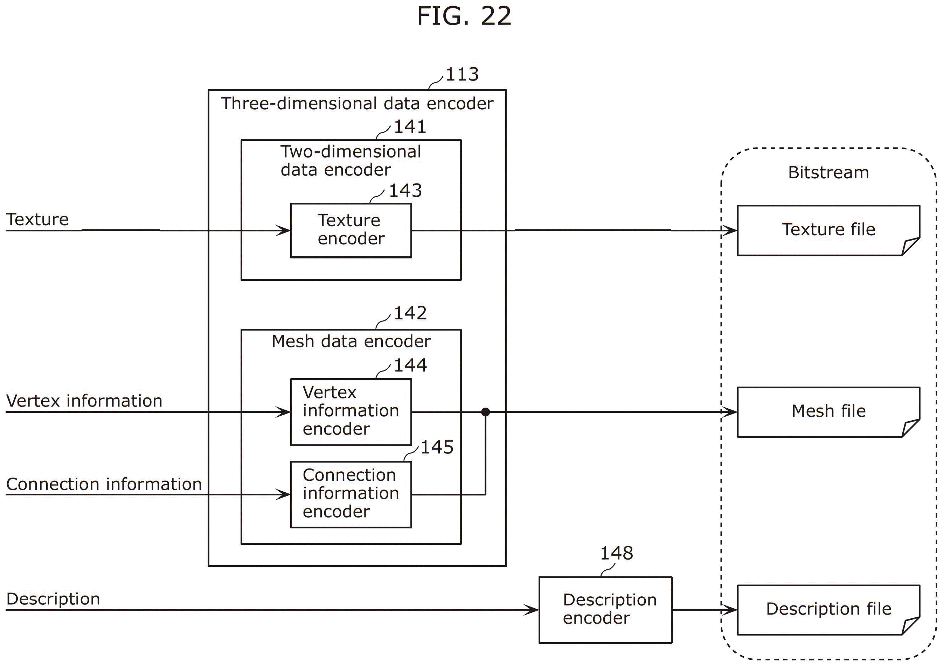

   FIG. 22 is a conceptual diagram illustrating a specific example of encoding processing according to the embodiment.
[FIG. 23]

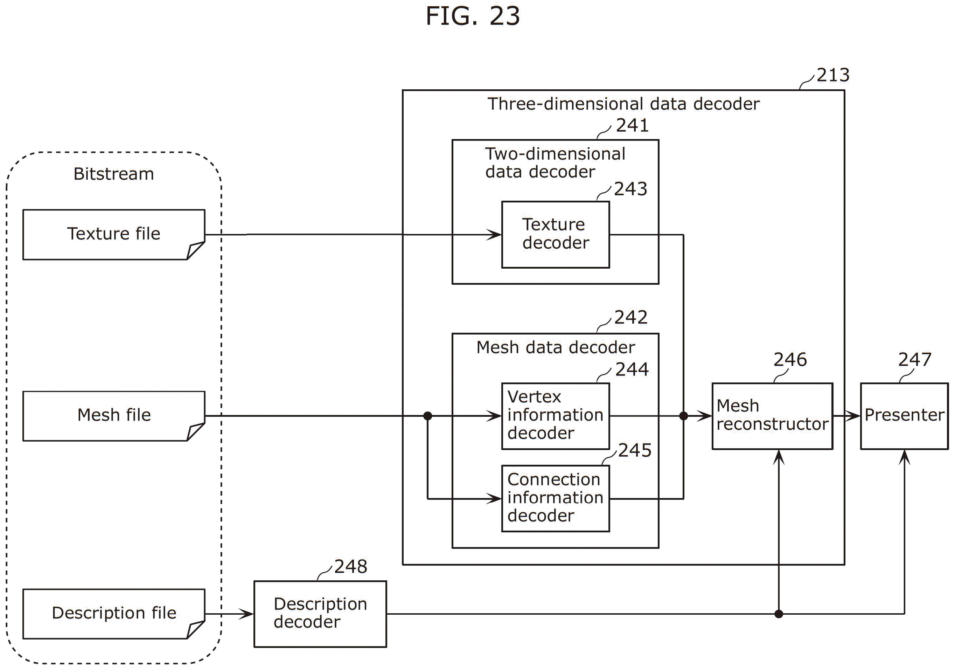

   FIG. 23 is a conceptual diagram illustrating a specific example of decoding processing according to the embodiment.
[FIG. 24]

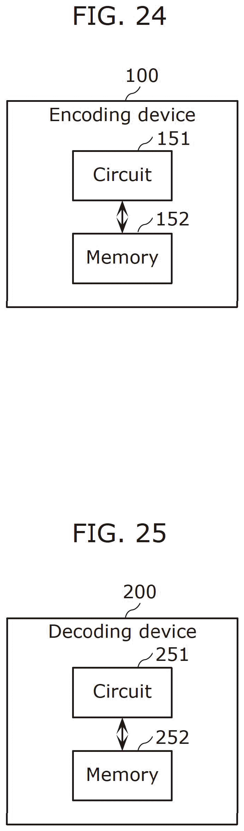

   FIG. 24 is a block diagram illustrating an implementation example of the encoding device according to the embodiment.
[FIG. 25]
   FIG. 25 is a block diagram illustrating an implementation example of the decoding device according to the embodiment.
[FIG. 26]

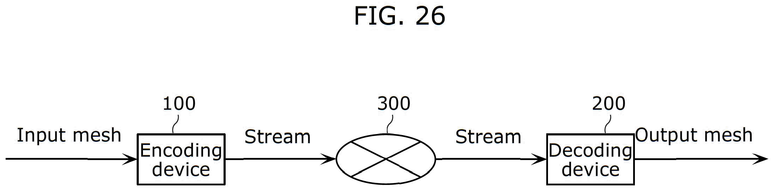

   FIG. 26 is a block diagram illustrating another configuration example of the encoding/decoding system according to the embodiment.
[FIG. 27]

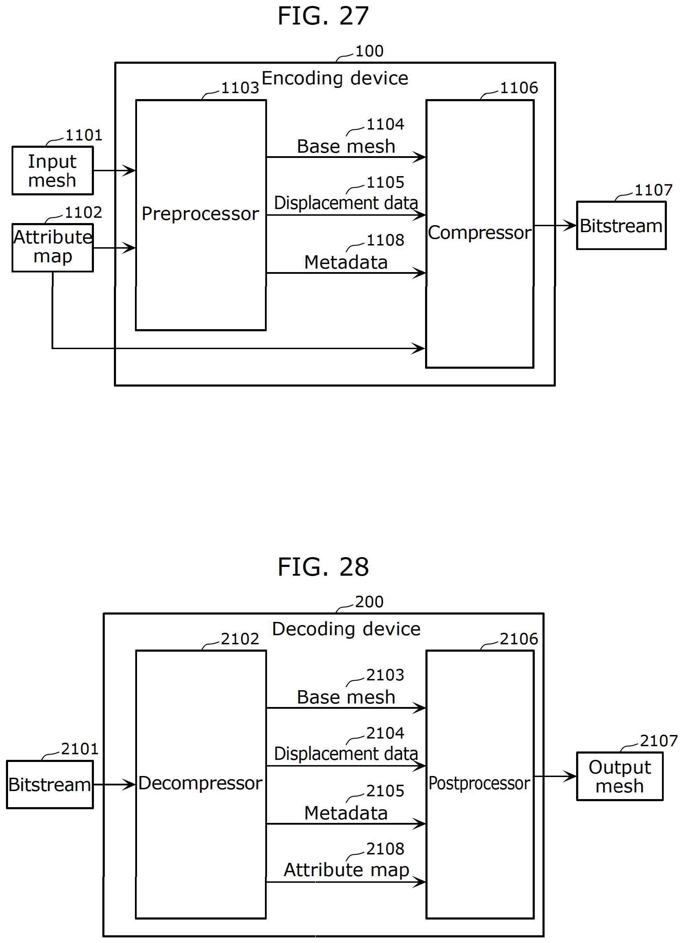

   FIG. 27 is a block diagram illustrating another configuration example of the encoding device according to the embodiment.
[FIG. 28]
   FIG. 28 is a block diagram illustrating another configuration example of the decoding device according to the embodiment.
[FIG. 29]

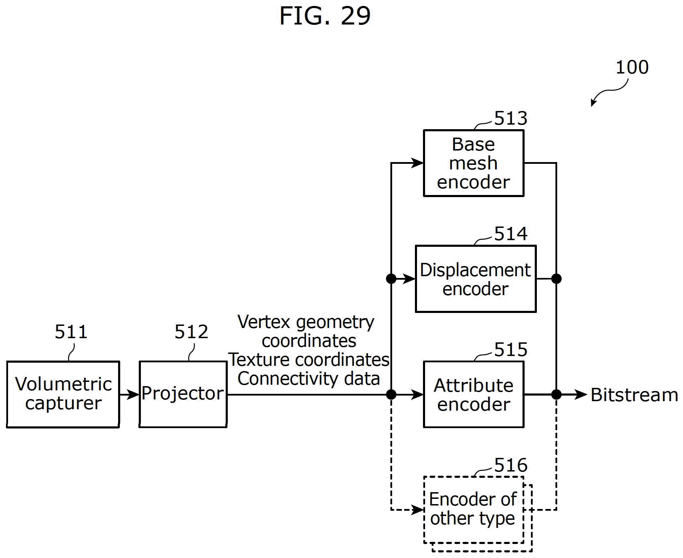

   FIG. 29 is a block diagram illustrating another configuration example of the encoding device according to the embodiment.
[FIG. 30]

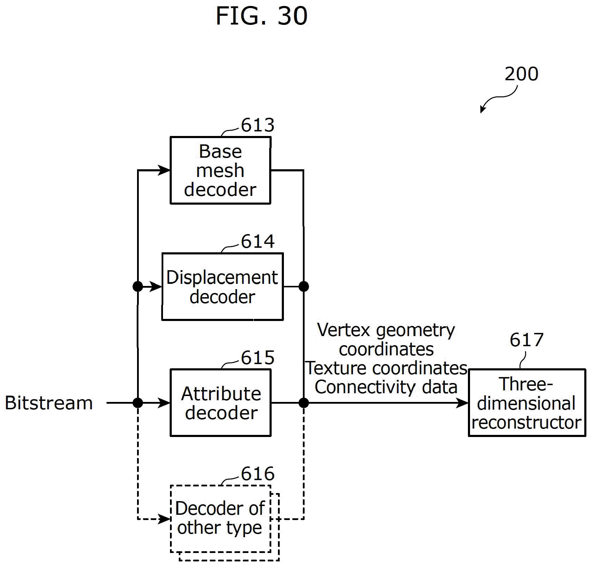

   FIG. 30 is a block diagram illustrating another configuration example of the decoding device according to the embodiment.
[FIG. 31]

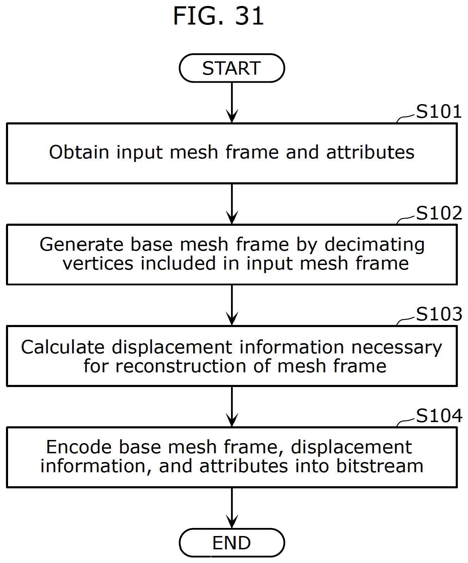

   FIG. 31 is a flowchart illustrating processing of the encoding device according to the embodiment.
[FIG. 32]

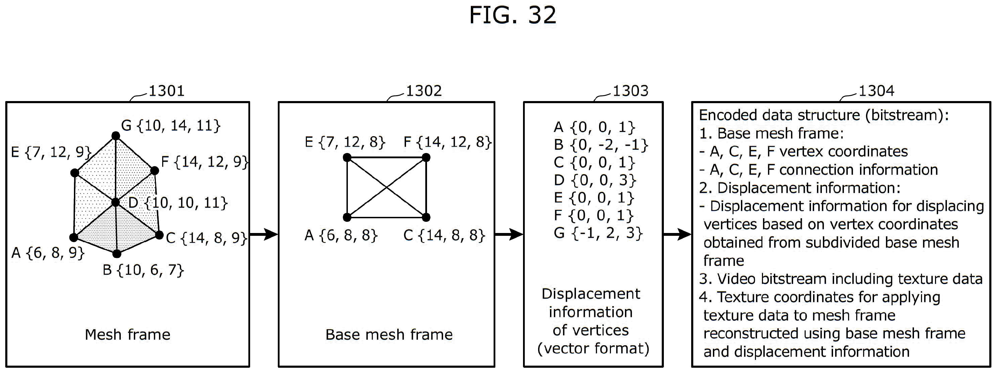

   FIG. 32 is an explanatory diagram conceptually illustrating encoding of a mesh frame according to the embodiment.
[FIG. 33]

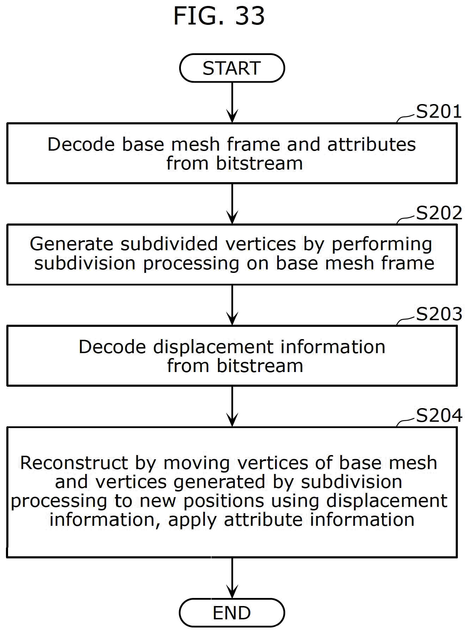

   FIG. 33 is a flowchart illustrating processing of the decoding device according to the embodiment.
[FIG. 34]

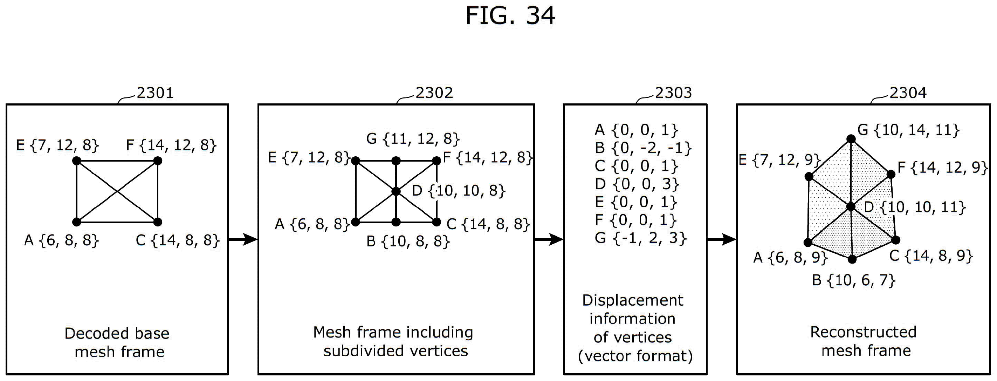

   FIG. 34 is an explanatory diagram conceptually illustrating decoding of a mesh frame according to the embodiment.
[FIG. 35]

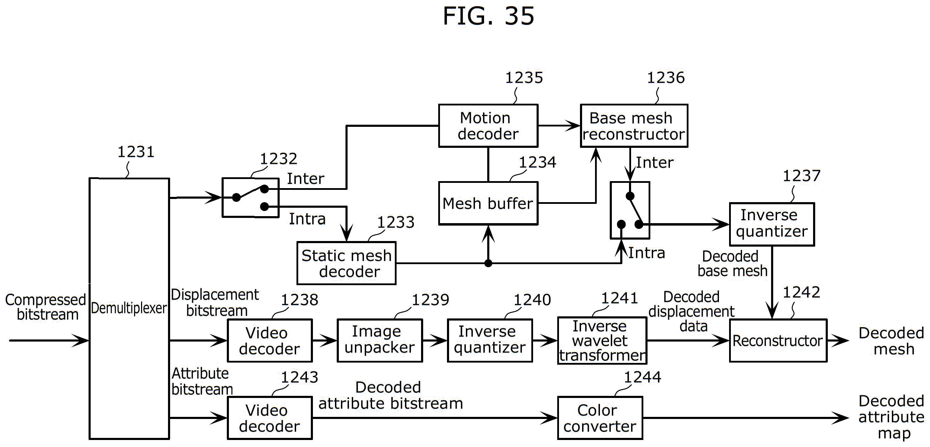

   FIG. 35 is a block diagram illustrating a configuration example of the decoding device according to the embodiment.
[FIG. 36]

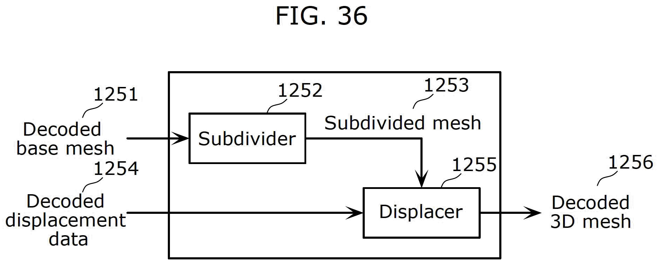

   FIG. 36 is a block diagram illustrating a configuration example of the decoding device according to the embodiment.
[FIG. 37]

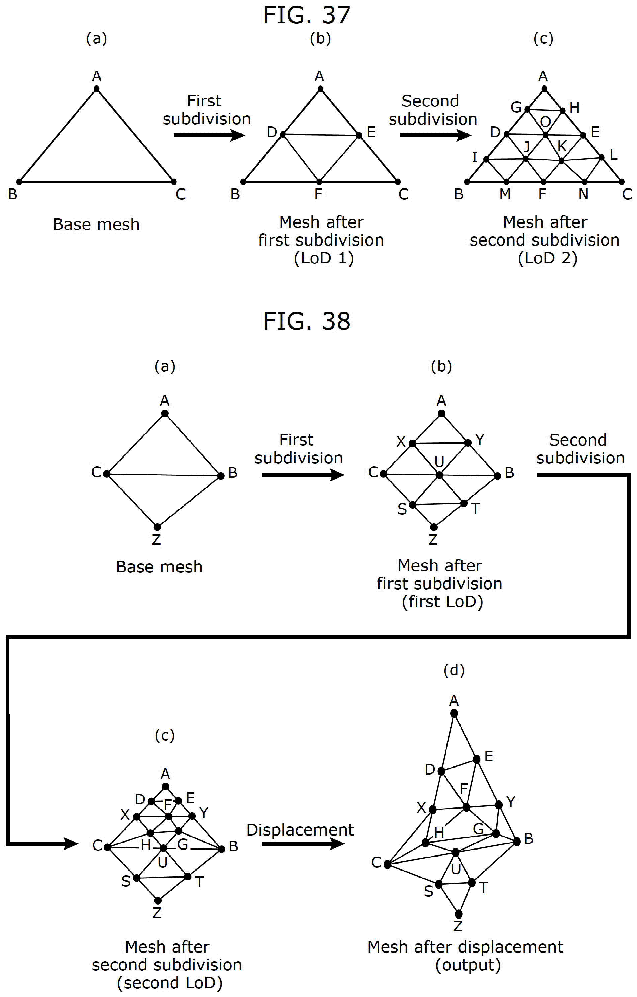

   FIG. 37 is an explanatory diagram illustrating an example of subdivision according to the embodiment.
[FIG. 38]
   FIG. 38 is an explanatory diagram illustrating an example of displacement of vertices after being displaced after subdivision according to the embodiment.
[FIG. 39]

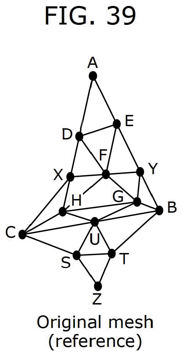

   FIG. 39 is an explanatory diagram illustrating an example of vertices of an original mesh according to the embodiment.
[FIG. 40]

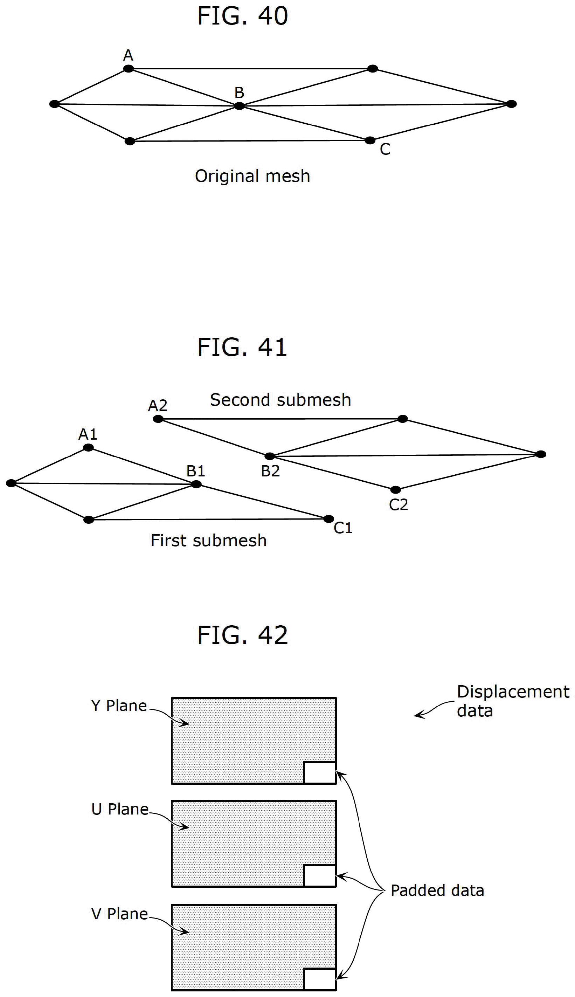

   FIG. 40 is an explanatory diagram illustrating an example of a mesh according to the embodiment.
[FIG. 41]
   FIG. 41 is an explanatory diagram illustrating an example of the division of a mesh into submeshes according to the embodiment.
[FIG. 42]
   FIG. 42 is a first explanatory diagram illustrating an example of packing of displacement information into an image frame according to the embodiment.
[FIG. 43]

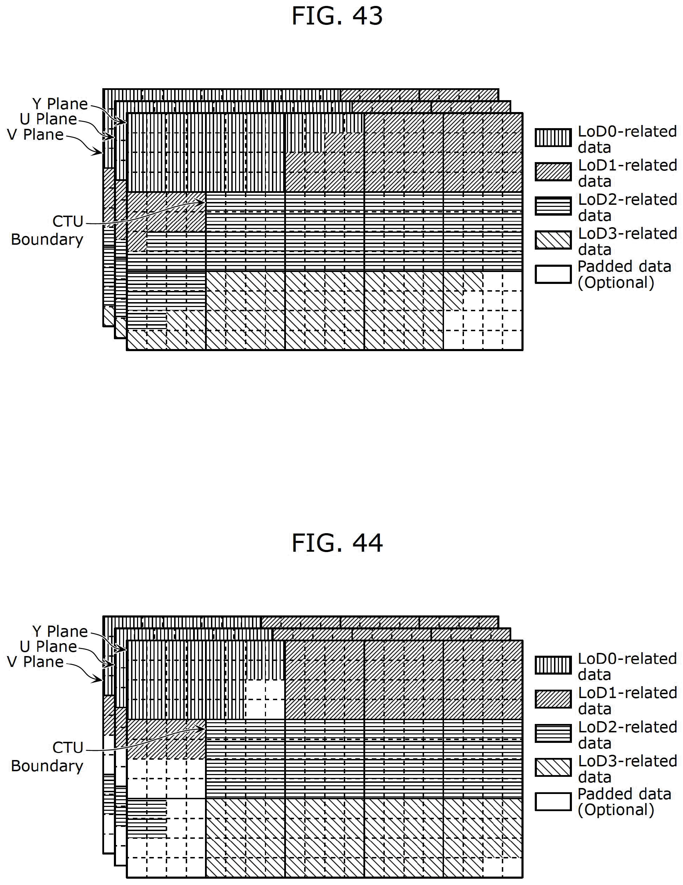

   FIG. 43 is a second explanatory diagram illustrating an example of packing of displacement information into an image frame according to the embodiment.
[FIG. 44]
   FIG. 44 is a third explanatory diagram illustrating an example of packing of displacement information into an image frame according to the embodiment.
[FIG. 45]

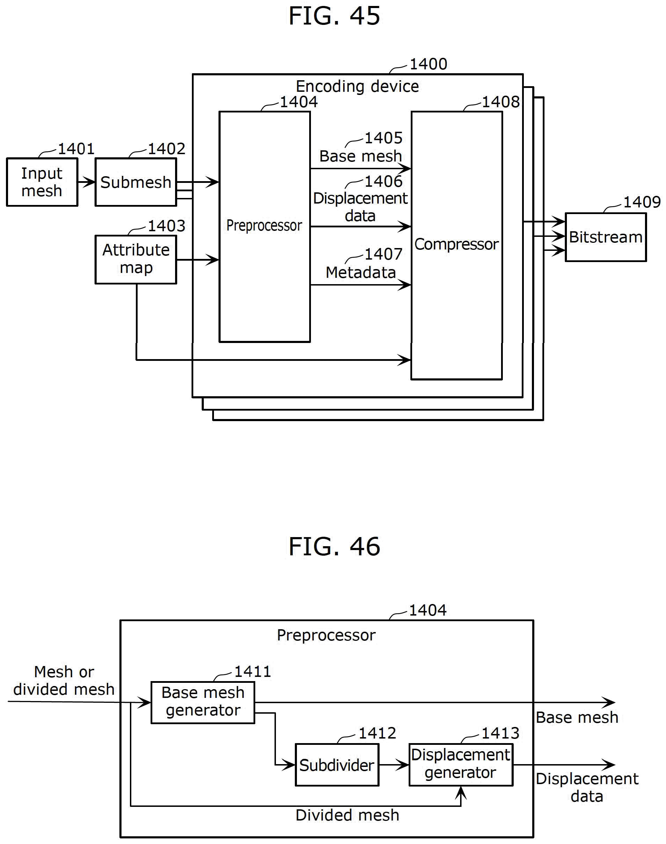

   FIG. 45 illustrates a configuration example of the encoding device in a case of dividing into a plurality of submeshes according to the embodiment.
[FIG. 46]
   FIG. 46 illustrates a configuration example of a preprocessor according to the embodiment.
[FIG. 47]

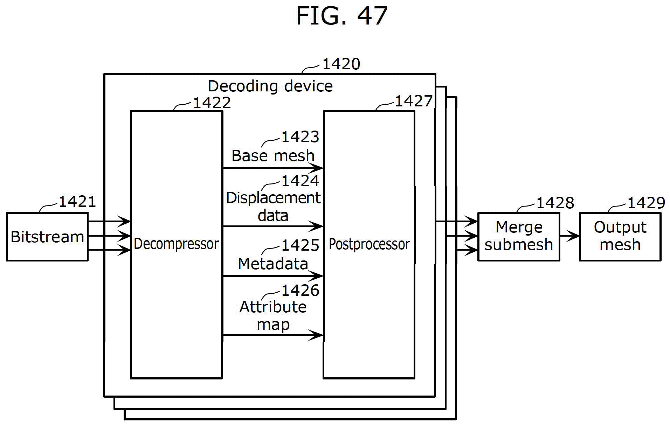

   FIG. 47 illustrates a configuration example of a decoding device in a case of dividing into a plurality of submeshes according to the embodiment.
[FIG. 48]

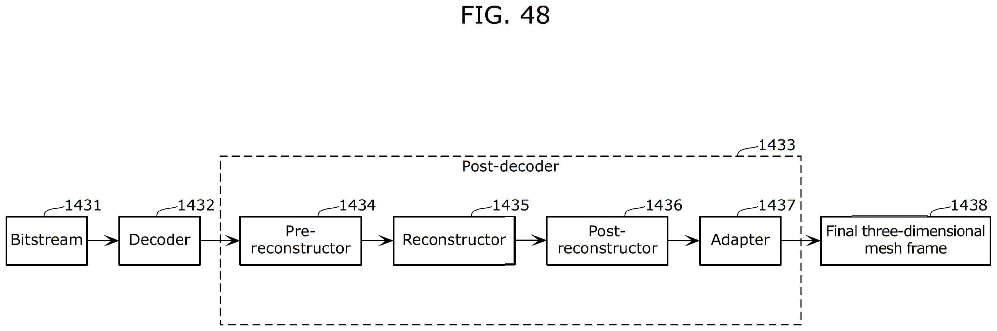

   FIG. 48 is a diagram for explaining post-decoding processing according to the embodiment.
[FIG. 49]

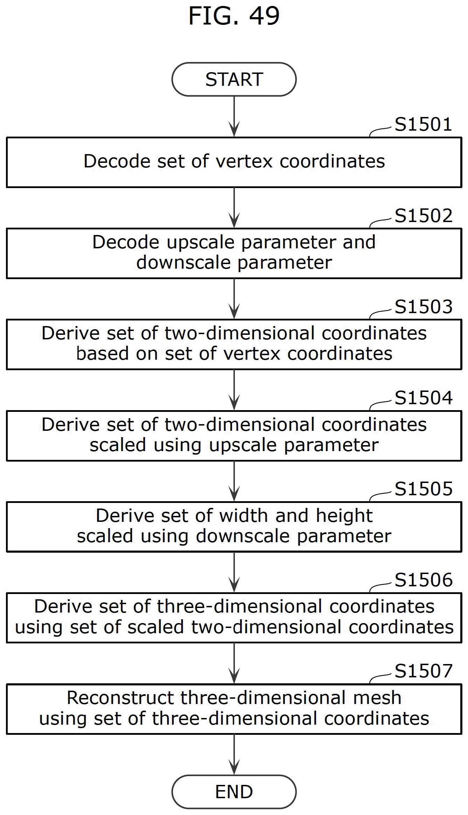

   FIG. 49 is a flowchart illustrating an example of decoding processing of a three-dimensional mesh according to the embodiment.
[FIG. 50]

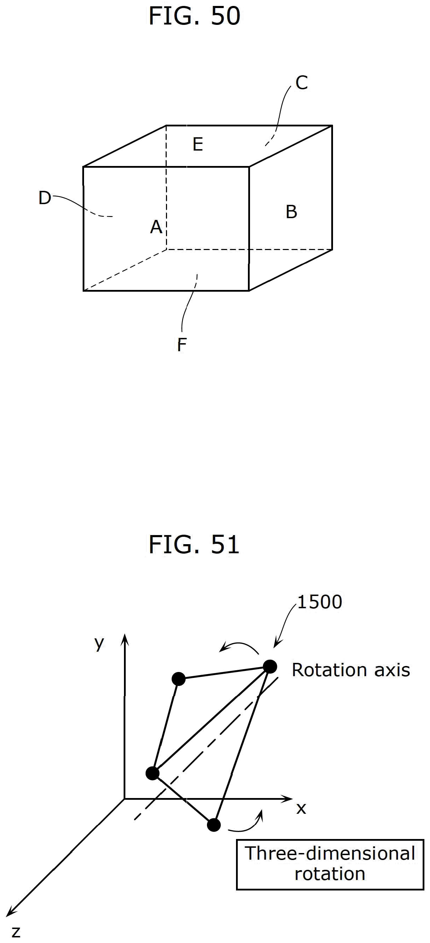

   FIG. 50 illustrates an example of different two-dimensional planes according to the embodiment.
[FIG. 51]
   FIG. 51 illustrates an example of three-dimensional rotation of a set of vertex coordinates around the z-axis according to the embodiment.
[FIG. 52]

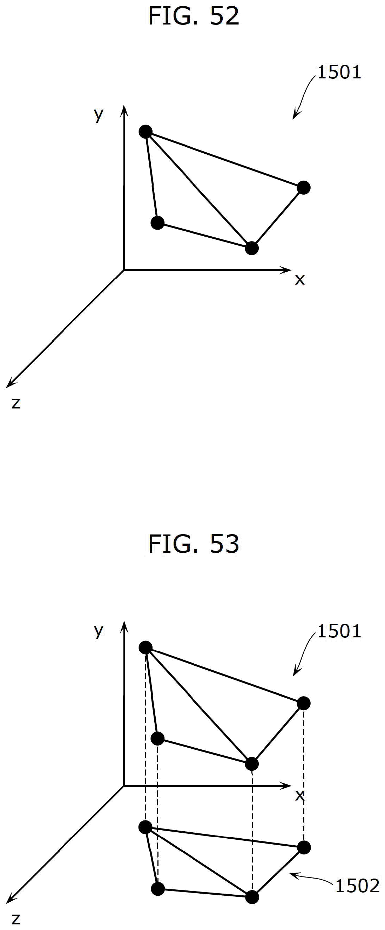

   FIG. 52 illustrates an example of three-dimensional rotation of a set of vertex coordinates around the z-axis according to the embodiment.
[FIG. 53]
   FIG. 53 illustrates an example of projecting vertex coordinates onto a two-dimensional plane according to the embodiment.
[FIG. 54]

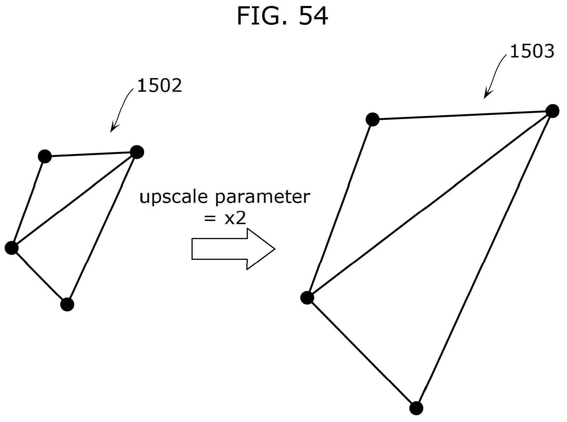

   FIG. 54 illustrates an example of upscaling a set of two-dimensional coordinates according to the embodiment.
[FIG. 55]

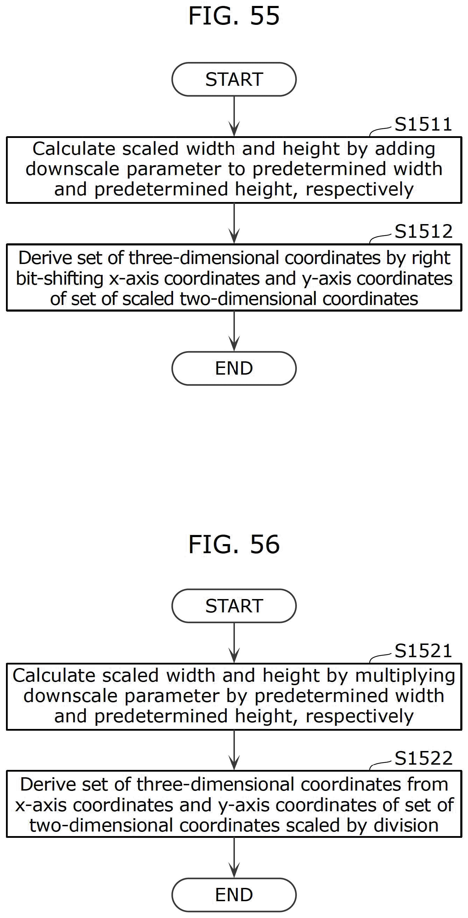

   FIG. 55 is a flowchart illustrating an example of the scaling processing of step S1505 and the normalization processing of step S1506 according to the embodiment.
[FIG. 56]
   FIG. 56 is a flowchart illustrating another example of the scaling processing of step S1505 and the normalization processing of step S1506 according to the embodiment.
[FIG. 57]

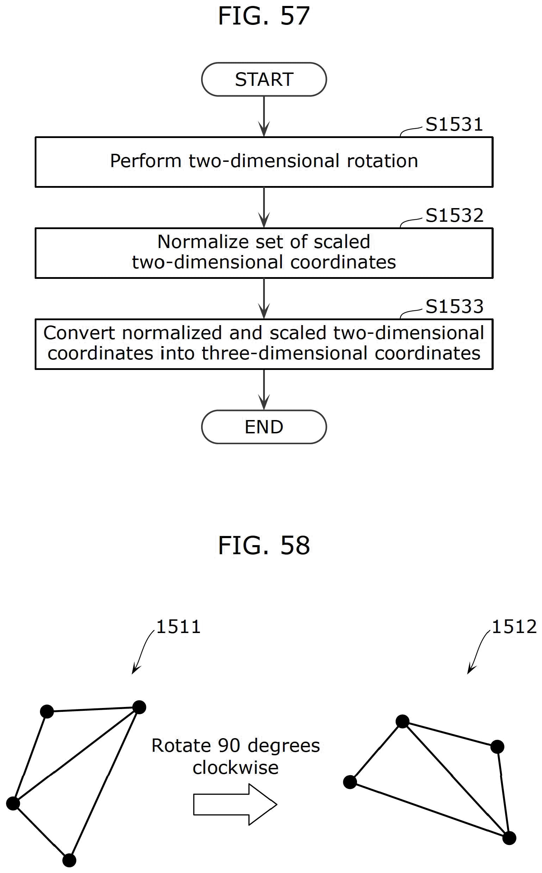

   FIG. 57 is a flowchart illustrating a variation of step S1505 according to the embodiment.
[FIG. 58]
   FIG. 58 illustrates an example of two-dimensional rotation according to the embodiment.
[FIG. 59]

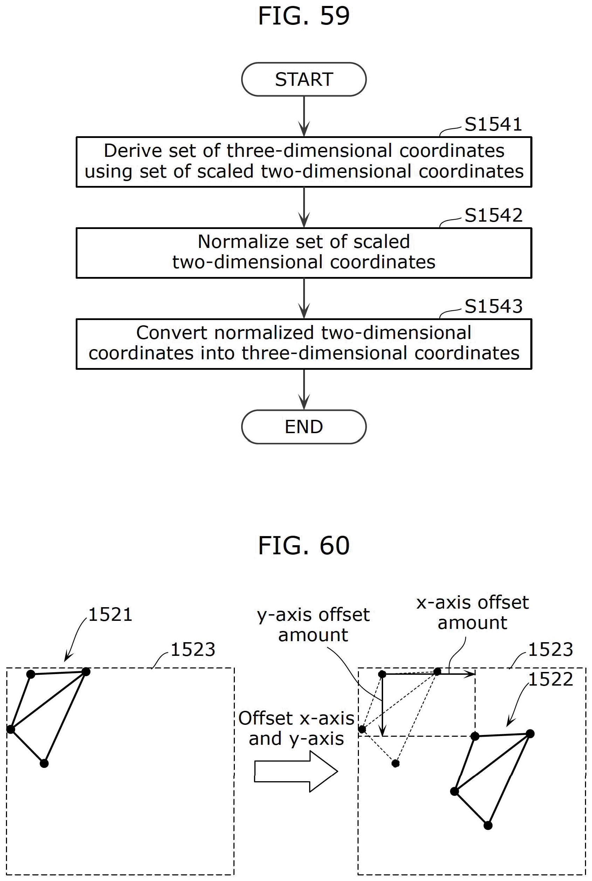

   FIG. 59 is a flowchart illustrating another variation of step S1505 according to the embodiment.
[FIG. 60]
   FIG. 60 illustrates an example of shift processing (translation processing) on a set of two-dimensional coordinates according to the embodiment.
[FIG. 61]

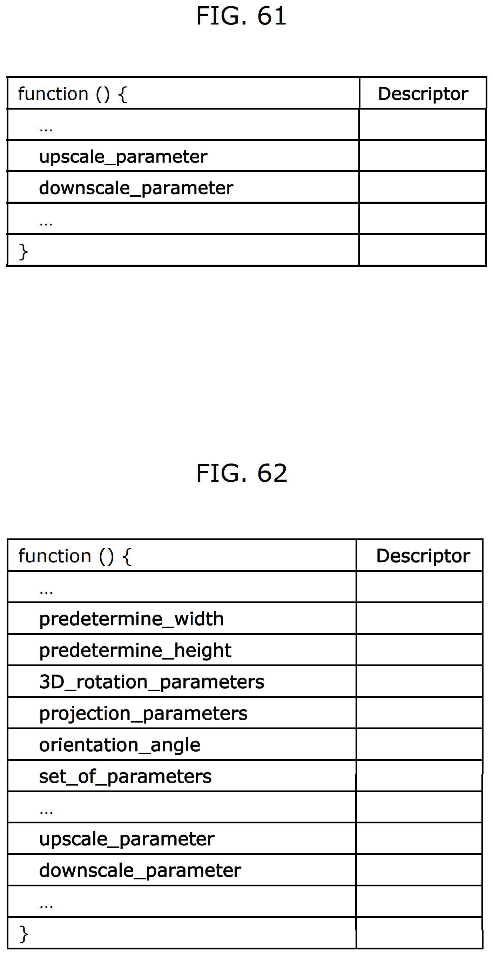

   FIG. 61 illustrates an example of syntax in the present disclosure according to the embodiment.
[FIG. 62]
   FIG. 62 illustrates another example of syntax in the present disclosure according to the embodiment.
[FIG. 63]

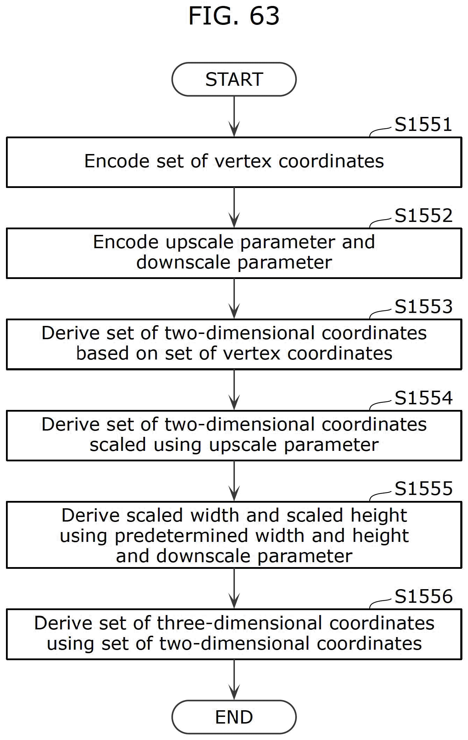

   FIG. 63 is a flowchart illustrating an example of encoding processing of a three-dimensional mesh according to the embodiment.
[FIG. 64]

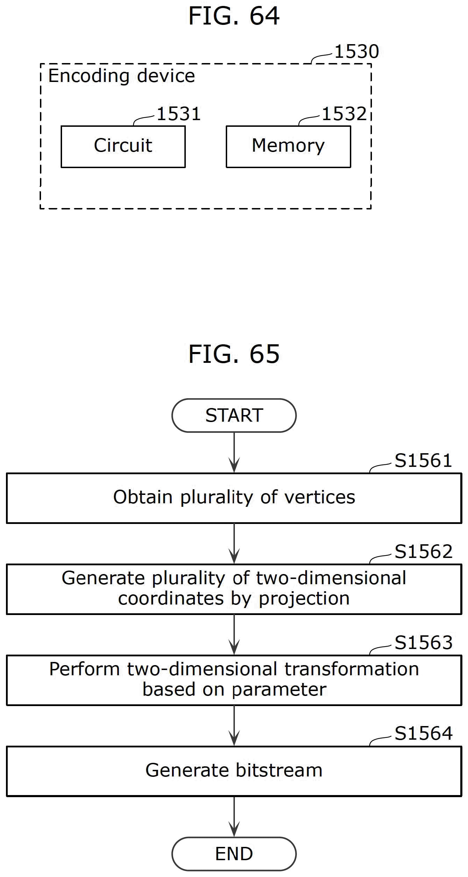

   FIG. 64 illustrates an example of a configuration of the encoding device according to the embodiment.
[FIG. 65]
   FIG. 65 is a flowchart illustrating an example of an encoding method performed by the encoding device according to the embodiment.
[FIG. 66]

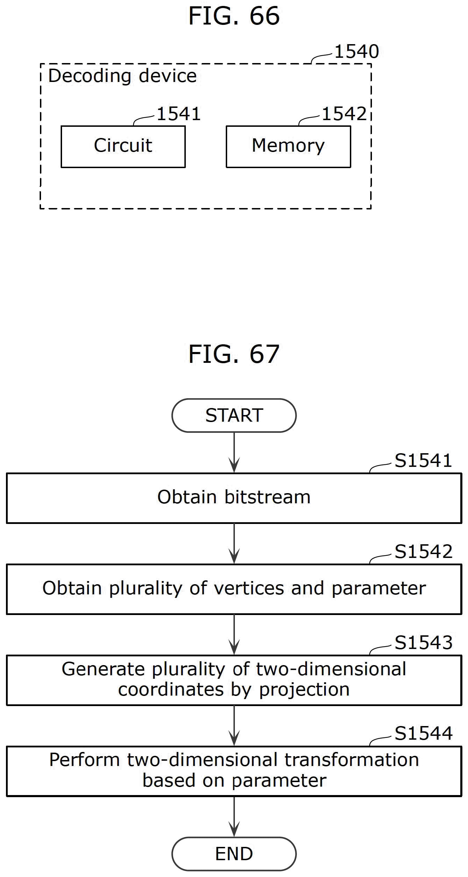

   FIG. 66 illustrates an example of a configuration of the decoding device according to the embodiment.
[FIG. 67]
   FIG. 67 is a flowchart illustrating an example of a decoding method performed by the decoding device according to the embodiment.

### [Description of Embodiments]

### <Overview of Present Disclosure>

A three-dimensional (3D) mesh is used for a computer graphics video, for example. For example, the computer graphics video is formed by a plurality of frames that temporally differs from each other, and each frame may be represented by a three-dimensional mesh.

In addition, the three-dimensional mesh is formed by vertex information that indicates a position of each of a plurality of vertices in a three-dimensional space, connection information that indicates a connection relationship between the plurality of vertices, and attribute information that indicates an attribute of each vertex or each face. Each face is constructed according to a connection relationship between a plurality of vertices. Such a three-dimensional mesh can represent various computer graphics videos.

Furthermore, for transmission and storage of a three-dimensional mesh, efficient encoding and decoding of a three-dimensional mesh is expected. For efficient encoding and decoding of a three-dimensional mesh, arithmetic encoding and arithmetic decoding may be used.

There is a demand for further improvement in an encoding or decoding process related to three-dimensional data. An object of the present disclosure is to improve the encoding or decoding process related to three-dimensional data.

Hereinafter, aspects of the present invention derived from the content of the disclosure of the present disclosure will be described by way of example, and the effects and the like derived from the aspect of the invention will be described.

An encoding method according to a first aspect of the present disclosure includes: obtaining a plurality of vertices included in a three-dimensional mesh; generating a plurality of two-dimensional coordinates by projecting the plurality of vertices onto a two-dimensional plane; performing a two-dimensional transformation on the plurality of two-dimensional coordinates based on a parameter; and generating a bitstream including the parameter. The plurality of two-dimensional coordinates after the two-dimensional transformation are used for mapping a texture of the three-dimensional mesh.

With this, since a bitstream including a parameter as information for identifying a region to which a texture of the three-dimensional mesh is mapped is generated, the decoding device that obtains the bitstream can identify the region of the texture to be mapped to the three-dimensional mesh based on the plurality of vertices and the parameter.

An encoding method according to a second aspect of the present disclosure is the encoding method according to the first aspect, wherein the two-dimensional transformation includes a process of scaling the plurality of two-dimensional coordinates, and the parameter includes a scaling ratio.

With this, since the scaling ratio of the plurality of two-dimensional coordinates can be notified to the decoding device, the decoding device can identify the region of the texture to be mapped to the three-dimensional mesh.

An encoding method according to a third aspect of the present disclosure is the encoding method according to the first aspect, wherein the two-dimensional transformation includes a process of shifting positions of the plurality of two-dimensional coordinates, and the parameter includes an offset amount in the shifting.

With this, since the offset amount in the shifting of the plurality of two-dimensional coordinates can be notified to the decoding device, the decoding device can identify the region of the texture to be mapped to the three-dimensional mesh.

An encoding method according to a fourth aspect of the present disclosure is the encoding method according to the first aspect, wherein the two-dimensional transformation includes a process of performing two-dimensional rotation on the plurality of two-dimensional coordinates, and the parameter includes a rotation angle of the two-dimensional rotation.

With this, since the rotation angle of the two-dimensional rotation of the plurality of two-dimensional coordinates can be notified to the decoding device, the decoding device can identify the region of the texture to be mapped to the three-dimensional mesh.

An encoding method according to a fifth aspect of the present disclosure is the encoding method according to any one of the first aspect to the fourth aspect, wherein the projecting includes performing three-dimensional rotation on the three-dimensional mesh in a three-dimensional space, and projecting the three-dimensional mesh after the three-dimensional rotation onto the two-dimensional plane, and the bitstream includes a rotation angle of the three-dimensional rotation.

With this, since the rotation angle of the three-dimensional rotation of the three-dimensional mesh can be notified to the decoding device, the decoding device can identify the region of the texture to be mapped to the three-dimensional mesh.

An encoding method according to a sixth aspect of the present disclosure is the encoding method according to the second aspect, wherein the scaling ratio includes at least one of an upscale parameter used for upscaling processing or a downscale parameter used for downscaling processing.

An encoding method according to a seventh aspect of the present disclosure is the encoding method according to the sixth aspect, wherein the scaling ratio is represented by a fraction having the upscale parameter as the numerator and the downscale parameter as the denominator.

An encoding method according to an eighth aspect of the present disclosure is the encoding method according to the sixth aspect or the seventh aspect, wherein at least one of the upscale parameter or the downscale parameter is an integer.

An encoding method according to a ninth aspect of the present disclosure is the encoding method according to the sixth aspect or the seventh aspect, wherein at least one of the upscale parameter or the downscale parameter is a power of two.

A decoding method according to a tenth aspect of the present disclosure includes: obtaining a bitstream; obtaining, from the bitstream, a plurality of vertices included in a three-dimensional mesh and a parameter; generating a plurality of two-dimensional coordinates by projecting the plurality of vertices onto a two-dimensional plane; and performing a two-dimensional transformation on the plurality of two-dimensional coordinates based on the parameter. The plurality of two-dimensional coordinates after the two-dimensional transformation are used for mapping a texture to the three-dimensional mesh.

With this, since a parameter as information for identifying a region of the texture to be mapped to the three-dimensional mesh is obtained from the bitstream including the parameter, the decoding device that obtains the bitstream can identify the region of the texture to be mapped to the three-dimensional mesh based on the plurality of vertices and the parameter.

A decoding method according to an eleventh aspect of the present disclosure is the decoding method according to the tenth aspect, wherein the two-dimensional transformation includes a process of scaling the plurality of two-dimensional coordinates, and the parameter includes a scaling ratio.

With this, since the scaling ratio of the plurality of two-dimensional coordinates can be obtained, the region of the texture to be mapped to the three-dimensional mesh can be identified.

A decoding method according to a twelfth aspect of the present disclosure is the decoding method according to the tenth aspect, wherein the two-dimensional transformation includes a process of shifting positions of the plurality of two-dimensional coordinates, and the parameter includes an offset amount in the shifting.

With this, since the offset amount in the shifting of the plurality of two-dimensional coordinates can be obtained, the region of the texture to be mapped to the three-dimensional mesh can be identified.

A decoding method according to a thirteenth aspect of the present disclosure is the decoding method according to the tenth aspect, wherein the two-dimensional transformation includes a process of performing two-dimensional rotation on the plurality of two-dimensional coordinates, and the parameter includes a rotation angle of the two-dimensional rotation.

With this, since the rotation angle of the two-dimensional rotation of the plurality of two-dimensional coordinates can be obtained, the region of the texture to be mapped to the three-dimensional mesh can be identified.

A decoding method according to a fourteenth aspect of the present disclosure is the decoding method according to any one of the tenth aspect to the thirteenth aspect, wherein the projecting includes performing three-dimensional rotation on the three-dimensional mesh in a three-dimensional space, and projecting the three-dimensional mesh after the three-dimensional rotation onto the two-dimensional plane, and the bitstream includes a rotation angle of the three-dimensional rotation.

With this, since the rotation angle of the three-dimensional rotation of the three-dimensional mesh can be obtained, the region of the texture to be mapped to the three-dimensional mesh can be identified.

A decoding method according to a fifteenth aspect of the present disclosure is the decoding method according to the eleventh aspect, wherein the scaling ratio includes at least one of an upscale parameter used for upscaling processing or a downscale parameter used for downscaling processing.

A decoding method according to a sixteenth aspect of the present disclosure is the decoding method according to the fifteenth aspect, wherein the scaling ratio is represented by a fraction having the upscale parameter as the numerator and the downscale parameter as the denominator.

A decoding method according to a seventeenth aspect of the present disclosure is the decoding method according to the fifteenth aspect or the sixteenth aspect, wherein at least one of the upscale parameter or the downscale parameter is an integer.

A decoding method according to an eighteenth aspect of the present disclosure is the decoding method according to the fifteenth aspect or the sixteenth aspect, wherein at least one of the upscale parameter or the downscale parameter is a power of two.

An encoding device according to a nineteenth aspect of the present disclosure includes a circuit and a memory connected to the circuit. In operation, the circuit performs: obtaining a plurality of vertices included in a three-dimensional mesh; generating a plurality of two-dimensional coordinates by projecting the plurality of vertices onto a two-dimensional plane; performing a two-dimensional transformation on the plurality of two-dimensional coordinates based on a parameter; and generating a bitstream including the parameter. The plurality of two-dimensional coordinates after the two-dimensional transformation are used for mapping a texture of the three-dimensional mesh.

With this, since a bitstream including a parameter as information for identifying a region to which a texture of the three-dimensional mesh is mapped is generated, the decoding device that obtains the bitstream can identify the region of the texture to be mapped to the three-dimensional mesh based on the plurality of vertices and the parameter.

A decoding device according to a twentieth aspect of the present disclosure includes a circuit and a memory connected to the circuit. In operation, the circuit performs: obtaining a bitstream; obtaining, from the bitstream, a plurality of vertices included in a three-dimensional mesh and a parameter; generating a plurality of two-dimensional coordinates by projecting the plurality of vertices onto a two-dimensional plane; and performing a two-dimensional transformation on the plurality of two-dimensional coordinates based on the parameter. The plurality of two-dimensional coordinates after the two-dimensional transformation are used for mapping a texture to the three-dimensional mesh.

With this, since a parameter as information for identifying a region of the texture to be mapped to the three-dimensional mesh is obtained from the bitstream including the parameter, the decoding device that obtains the bitstream can identify the region of the texture to be mapped to the three-dimensional mesh based on the plurality of vertices and the parameter.

Note that these general or specific aspects may be implemented using a system, a device, an integrated circuit, a computer program, or a computer-readable recording medium such as a CD-ROM, or any combination of systems, devices, integrated circuits, computer programs, or recording media.

Hereinafter, an embodiment of the present disclosure will be described in detail with reference to the drawings.

The embodiments described below each illustrate a general or specific example of the present disclosure. The numerical values, shapes, materials, elements, the arrangement and connection of the elements, steps, order of the steps, etc., shown in the following embodiments are mere examples, and therefore do not limit the scope of the present invention. Accordingly, among the elements in the following embodiments, those not recited in any of the independent claims defining the broadest concept are described as optional elements.

### [Embodiment]

In the present embodiment, an encoding method and a decoding method will be described.

### <Expressions and Terms>

The following expressions and terms will be used herein.

### (1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

### (2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

### (3) Connection information

Connection information is information indicating a connection between vertices. For example, connection information indicates a connection for constructing a face or an edge of a three-dimensional mesh. Connection information may be expressed as "connectivity". In addition, connection information may also be expressed as face information.

### (4) Attribute information

Attribute information is information indicating an attribute of a vertex or a face. For example, attribute information indicates an attribute such as a color, an image, a normal vector, and the like associated with a vertex or a face. Attribute information may be expressed as "texture".

### (5) Face

A face is an element that constitutes a three-dimensional mesh. Specifically, a face is a polygon on a plane in a three-dimensional space. For example, a face can be determined as a triangle in the three-dimensional space.

### (6) Plane

A plane is a two-dimensional plane in a three-dimensional space. For example, a polygon is formed on a plane and a plurality of polygons are formed on a plurality of planes.

### (7) Bitstream

A bitstream corresponds to encoded information. A bitstream can also be expressed as a stream, an encoded bitstream, a compressed bitstream, or an encoded signal.

### (8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.

In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

### (9) Ordinal numbers

In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

### <Three-dimensional mesh>

FIG. 1 is a conceptual diagram illustrating a three-dimensional mesh according to the present embodiment. The three-dimensional mesh is constituted of a plurality of faces. For example, each face is a triangle. Vertices of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertices. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertices of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, texture coordinates, or an "attribute UV coordinate".

Furthermore, information on a color, an image, a moving image, and the like to be used as attribute information may be expressed as "parametric space".

A texture may be reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

### <System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

### <Encoding Device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be further divided into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

### <Decoding Device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be further divided into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

### <Bitstream>

Vertex information, connection information, and attribute information are encoded and stored in a bitstream. A relationship between these items of information and the bitstream will be described below.

FIG. 9 is a conceptual diagram illustrating a configuration example of a bitstream according to the present embodiment. In this example, connection information, vertex information, and attribute information are integrated in the bitstream. For example, connection information, vertex information, and attribute information may be included in one file.

In addition, a plurality of portions of the items of information may be sequentially stored such as a first portion of connection information, a first portion of vertex information, a first portion of attribute information, a second portion of connection information, a second portion of vertex information, a second portion of attribute information, and so on. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and connection information, vertex information, and attribute information are respectively stored in different files. While a file including connection information, a file including vertex information, and a file including attribute information are illustrated here, storage formats are not limited to this example. For example, two types of information among connection information, vertex information, and attribute information may be included in one file and the one remaining type of information may be included in another file.

Alternatively, the items of information can be stored by being divided into a larger number of files. For example, a plurality of portions of connection information may be stored in a plurality of files, a plurality of portions of vertex information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and connection information, vertex information, and attribute information are respectively stored in different sub-bitstreams.

While a sub-bitstream including connection information, a sub-bitstream including vertex information, and a sub-bitstream including attribute information are illustrated here, storage formats are not limited to this example.

For example, two types of information among connection information, vertex information, and attribute information may be included in one sub-bitstream and the one remaining type of information may be included in another sub-bitstream. Specifically, attribute information such as a two-dimensional image may be stored in a sub-bitstream conforming to an image encoding system separately from a sub-bitstream of connection information and vertex information.

In addition, each sub-bitstream may include a plurality of files. Furthermore, a plurality of portions of connection information may be stored in a plurality of files, a plurality of portions of vertex information may be stored in a plurality of files, and a plurality of portions of attribute information may be stored in a plurality of files.

Furthermore, an order of storage of connection information, vertex information, and attribute information is not limited to the example illustrated in FIG. 9, FIG. 10, and FIG. 11, and an order of storage that differs from this example may be used. For example, vertex information, connection information, and attribute information may be stored in a bitstream in this order. Alternatively, in an order other than this order, e.g., in any of orders: connection information, attribute information, and vertex information; vertex information, attribute information, and connection information; attribute information, connection information, and vertex information; and attribute information, vertex information, and connection information, these items of information may be stored in a bitstream.

Furthermore, each of connection information, vertex information, and attribute information may be divided into a plurality of data items, and the plurality of data items may be stored in a bitstream in a periodic order or in a random order.

### <Specific Example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertices or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Wi-Fi, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertices. Each face corresponds to an area enclosed by three or more edges.

In addition, a three-dimensional mesh has position information indicating three-dimensional coordinate positions of vertices. The position information is also expressed as vertex information or geometry. Furthermore, a three-dimensional mesh has connection information indicating a relationship among a plurality of vertices constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes items of position information G(1) to G(N) of N vertices and items of attribute information A1(1) to A1(N) of N vertices which constitute a three-dimensional mesh. In addition, in the example, M items of attribute information A2(1) to A2(M) are included. An item of attribute information need not correspond one-to-one to a vertex and need not correspond one-to-one to a face. In addition, attribute information need not exist.

Connection information is indicated by a combination of indexes of vertices. n[1, 3, 4] indicates a face of a triangle constituted of three vertices n = 1, n = 3, and n = 4. In addition, m[2, 4, 6] indicates that items of attribute information m = 2, m = 4, and m = 6 respectively correspond to the three vertices.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in items of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. This can reduce the size and complexity of circuits and software programs.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be high efficiency video coding (HEVC), versatile video coding (VVC), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the items of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be high efficiency video coding (HEVC), versatile video coding (VVC), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as graphics language transmission format (glTF) or universal scene description (USD).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called dynamic mesh coding (DMC). In addition, a video-based encoding system of a dynamic three-dimensional mesh may be called video-based dynamic mesh coding (V-DMC).

An encoding system of a point cloud may be called point cloud compression (PCC). A video-based encoding system of a point cloud may be called video-based point cloud compression (V-PCC). In addition, a geometry-based encoding system of a point cloud may be called geometry-based point cloud compression (G-PCC).

### <Implementation Example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

### <Encoding and Decoding of Displacement>

The following terms will be used herein as examples.

### (1) Image

An image is a data unit composed of a set of pixels, and includes a picture or a block smaller than a picture. Images include video as well as still pictures.

### (2) Picture

A picture is an image processing unit composed of a set of pixels, and may also be referred to as a frame or field.

### (3) Block

A block is a processing unit composed of a specific number of pixels. The following terms may also be used for blocks as illustrated in the examples below. The shape of a block is not particularly limited. A block can be, for example, a rectangular shape of M×N pixels, or a square shape of M×M pixels. A block may be a triangular shape, a circular shape, or other shapes. Examples of blocks are as follows.
- slice, tile, or brick
- CTU, superblock, or basic splitting unit
- VPDU, hardware processing splitting unit
- CU, processing block unit, prediction block unit (PU), or orthogonal transform block unit (TU)
- sub-block

### (4) Pixel or sample

A pixel or sample is the smallest point of an image, in other words, the smallest unit. A pixel or sample includes not only pixels at integer positions, but also pixels at sub-pixel positions generated based on pixels at integer positions.

### (5) Pixel value or sample value

A pixel value or sample value is an eigenvalue of a pixel. A pixel value or sample value includes a luma value, a chroma value, or an RGB gradation level, and can also include a depth value or a binary value of 0 or 1.

### (6) Flag

A flag indicates one or more bits. A flag is, for example, a parameter or index represented by two or more bits. A flag can also indicate not only a value represented by a binary number, but also a value represented by a number other than a binary number.

### (7) Signal

A signal refers to something that has been symbolized or encoded to convey information. A signal includes a discrete digital signal or a continuous analog signal.

### (8) Stream or bitstream

A stream or bitstream is a digital data sequence indicating a flow of digital data. A stream or bitstream may be one stream or may include a plurality of streams having a plurality of hierarchical layers. A stream or bitstream may be transmitted by serial communication using a single transmission path or may be transmitted by packet communication using a plurality of transmission paths.

### (9) Difference

In the case of a scalar quantity, a difference can include a simple difference (x - y) and difference calculation. A difference can include an absolute value of a difference (|x - y|), a square of a difference (x^2 - y^2), a square root of a difference (√/(x - y)), a weighted difference (ax - by, where a and b are constants), an offset difference (x - y + a, where a is an offset), or the like.

### (10) Sum

In the case of a scalar quantity, a sum can include a simple sum (x + y) and addition calculation. A sum can include an absolute value of a sum (|x + y|), a sum of squares (x^2 + y^2), a square root of a sum (√(x + y)), a weighted sum (ax + by, where a and b are constants), an offset sum (x + y + a, where a is an offset), or the like.

### (11) Based on

The expression "based on something" means that things other than that "something" may be considered. "Based on" may be used both when a direct result is obtained and when a result is obtained through an intermediate result.

### (12) "Used" or "use"

The expression "something is used" or "something was used" means that things other than that "something" may be considered. The expression "used" or "was used" may be used both when a direct result is obtained and when a result is obtained through an intermediate result.

### (13) Prohibited

"Prohibited" can be rephrased as "not permitted". "Not prohibited/prohibited" or "permitted/permitted" does not necessarily mean an obligation.

### (14) "Restriction" or "limitation"

"Restriction" or "limitation" can be rephrased as "do not permit/do not allow" or "not permitted/permitted". "Prohibited/not prohibited" or "not permitted/permitted" does not necessarily mean an obligation. What is prohibited quantitatively or qualitatively may be a part or all.

### (15) Chroma

The term chroma is an adjective represented by the symbol Cb or Cr, and indicates that a sample array or single sample represents one of two color difference signals related to primary colors. The term chroma may be used in place of the term chrominance.

### (16) Luma

The term luma is an adjective represented by the symbol or subscript Y or L, and indicates that a sample array or single sample represents a monochrome signal related to primary colors. Term luma may be used in place of the term luminance.

Hereinafter, the encoding/decoding system according to the present embodiment will be described.

In general, a three-dimensional model (also referred to as a 3D model) represents an object digitally such that a user can explore the model using zooming, panning, and rotation in all three dimensions while rendering it temporally. One way to construct such a representation is to construct a 3D mesh using triangles. The model stores the positions of the vertices of the triangles, connectivity of the vertices of the triangles with each other, and the attributes associated therewith (such as a normal or UV patches).

Storing all of this information in an uncompressed format requires very large storage space, and therefore the bandwidth for transmission becomes very large. The triangles forming the mesh often have a repetitive pattern and similar attributes especially in the temporal and spatial neighborhood. The repetition can be used to formulate efficient encoding and decoding methods for storage and transmission. One such encoding method and decoding method is Video-based Dynamic Mesh Coding (V-DMC).

FIG. 26 is a block diagram illustrating another configuration example of the encoding/decoding system according to the present embodiment. As illustrated in FIG. 26, the encoding/decoding system includes encoding device 100 and decoding device 200.

The encoding/decoding system receives a three-dimensional mesh (also referred to as 3D mesh) that is input in the format of three-dimensional coordinates of vertices (vertex information), connectivity (connection information), and associated attributes (attribute information). Note that the 3D mesh can include not only geometry but also a texture map.

Encoding device 100 receives the 3D mesh that has been input (also referred to as input 3D mesh or input mesh) in the format of three-dimensional coordinates of vertices, connectivity, and associated attributes. Encoding device 100 encodes all related information into a stream. The stream may be a single bitstream or a plurality of bitstreams.

Network 300 transmits the stream generated by the encoding device to decoding device 200. Network 300 may be the Internet, a wide area network (WAN), a local area network (LAN), or any combination thereof. Network 300 is not necessarily limited to a two-way communication network and may be a unidirectional communication network that transmits broadcast waves for terrestrial digital broadcasting, satellite broadcasting, or the like. In addition, instead of network 300, a recording medium such as a DVD (digital versatile disc) or a BD (Blu-Ray Disc) on which a stream is recorded may be used.

The stream is transmitted to decoding device 200 via network 300. Decoding device 200 decodes the bitstream to produce a three-dimensional mesh using the decoded vertices' three-dimensional coordinates, connectivity, and associated attributes. Decoding device 200 outputs the generated three-dimensional mesh (also referred to as output 3D mesh or output mesh).

FIG. 27 illustrates another configuration example of encoding device 100.

As illustrated in FIG. 27, encoding device 100 includes preprocessor 1103 and compressor 1106.

Encoding device 100 reads input mesh 1101 and attribute map 1102, and passes them to preprocessor 1103. Preprocessor 1103 processes the input mesh to extract base mesh 1104 and displacement data 1105. Attribute map 1102 is passed to compressor 1106 together with extracted base mesh 1104 and displacement data 1105.

Compressor 1106 compresses base mesh 1104, displacement data 1105, and attribute map 1102 to generate bitstream 1107. Compressor 1106 can transmit additional information to decoding device 200 by further including metadata 1108 in bitstream 1107.

FIG. 28 illustrates another configuration example of decoding device 200.

As illustrated in FIG. 28, decoding device 200 includes decompressor 2102 and postprocessor 2106.

Decoding device 200 reads bitstream 2101 and passes it to decompressor 2102. Decompressor 2102 decompresses base mesh 2103, displacement data 2104, and attribute map 2108 from bitstream 2101, and passes them to postprocessor 2106. One example of displacement data 2104 is displacement vectors.

Postprocessor 2106 processes base mesh 2103 according to displacement data 2104 and attribute map 2108 to generate output mesh 2107. Postprocessor 2106 may further use information from metadata 2105 to generate output mesh 2107.

FIG. 29 is a block diagram illustrating yet another configuration example of encoding device 100 according to the present embodiment.

In this example, encoding device 100 includes volumetric capturer 511, projector 512, base mesh encoder 513, displacement encoder 514, and attribute encoder 515, and optionally includes one or more encoders 516 of other types.

Volumetric capturer 511 captures a content and outputs the captured content to projector 512.

Projector 512 projects the content onto a three-dimensional mesh frame that includes vertex geometry coordinates (vertex coordinates indicating the position of a vertex), texture coordinates, and connectivity data (connection information). The data is output to base mesh encoder 513, displacement encoder 514, and attribute encoder 515, and optionally to one or more encoders 516 of other types. Each encoder compresses the data into a bitstream.

FIG. 30 is a block diagram illustrating yet another configuration example of decoding device 200 according to the present embodiment.

In this example, decoding device 200 includes base mesh decoder 613, displacement decoder 614, attribute decoder 615, one or more decoders 616 of other types, and three-dimensional reconstructor 617.

A bitstream is sent to base mesh decoder 613, displacement decoder 614, and attribute decoder 615 and optionally to one or more decoders 616 of other types. These decoders decode the bitstream to produce decoded data including vertex geometry coordinates, texture coordinates, and connectivity data. The decoded data is then sent to three-dimensional reconstructor 617, where a three-dimensional mesh frame is reconstructed.

Hereinafter, the encoding processing performed by encoding device 100 will be described in detail.

FIG. 31 is a flowchart illustrating processing of encoding device 100. FIG. 32 is an explanatory diagram conceptually illustrating encoding of a mesh frame. With reference to FIG. 31 and FIG. 32, processes performed by encoding device 100 will be described.

In step S101, encoding device 100 reads the 3D mesh frame that is the input mesh frame, and its attributes. The input mesh frame is a mesh frame input into encoding device 100. An example of a 3D mesh frame that is the input mesh frame is illustrated as mesh frame 1301 (see FIG. 32).

In step S102, encoding device 100 generates a base mesh frame having fewer vertices than the input mesh frame by performing decimation processing on the input mesh frame read in step S101. A base mesh frame generated by decimating mesh frame 1301 is illustrated as base mesh frame 1302 (see FIG. 32).

In step S103, encoding device 100 calculates displacement information used by decoding device 200 to reconstruct the mesh frame. The displacement information corresponds to displacement vectors from vertices of the base mesh frame generated in step S102 toward vertices of the input mesh frame. Methods for calculating the displacement information include a method of subtracting the coordinates of vertices of the base mesh frame from the coordinates of vertices of the input mesh frame. Displacement information calculated from mesh frame 1301 and base mesh frame 1302 is illustrated as displacement information 1303 (see FIG. 32). Displacement information 1303 is in vector format, or in other words, is expressed as displacement vectors.

In step S104, encoding device 100 encodes the base mesh frame generated in step S102, the displacement information generated in step S103, and the attributes of the input mesh frame into a bitstream (corresponding to a compressed bitstream). An example of a bitstream is illustrated as bitstream 1304 (see FIG. 32).

More specifically, bitstream 1304 includes the vertex coordinates and connection information of vertices A, C, E, and F, the displacement information, a video bitstream including the texture data, and a compressed attribute map (see FIG. 32). The displacement information includes displacement information for displacing vertices based on vertex coordinates obtained from the subdivided base mesh frame. The compressed attribute map is texture coordinates for applying texture data to a mesh frame reconstructed using the base mesh frame and the displacement information.

Hereinafter, the decoding processing performed by decoding device 200 will be described in detail.

FIG. 33 is a flowchart illustrating processing of decoding device 200. FIG. 34 is an explanatory diagram conceptually illustrating decoding of a 3D mesh. With reference to FIG. 33 and FIG. 34, processes performed by decoding device 200 will be described.

In step S201, decoding device 200 decodes the base mesh frame and attributes from the bitstream (corresponding to the compressed bitstream). An example of a decoded base mesh frame (corresponding to a decoded base mesh frame) is illustrated as decoded base mesh frame 2301 (see FIG. 34).

In step S202, decoding device 200 generates subdivided vertices by performing subdivision processing on the base mesh frame decoded in step S201. An example of a base mesh frame including subdivided vertices is illustrated as base mesh frame 2302 (see FIG. 34).

In step S203, decoding device 200 decodes displacement information from the bitstream (corresponding to the compressed bitstream). An example of decoded displacement information is illustrated as displacement information 2303 (see FIG. 34). Displacement information 2303 is in vector format, or in other words, is expressed as displacement vectors.

In step S204, decoding device 200 reconstructs the shape of the mesh frame by moving the vertices of the base mesh frame including the subdivided vertices to new positions using the displacement information, and restores the mesh frame by applying the attribute information. One example of an attribute is texture. An example of a reconstructed mesh frame is illustrated as mesh frame 2304 (see FIG. 34).

FIG. 35 is a block diagram illustrating a configuration example of the decoding device according to the present embodiment.

FIG. 35 illustrates an example of a block diagram of general intra decoding.

The decoding device illustrated in FIG. 35 includes demultiplexer 1231, switch 1232, static mesh decoder 1233, mesh buffer 1234, motion decoder 1235, base mesh reconstructor 1236, inverse quantizer 1237, video decoder 1238, image unpacker 1239, inverse quantizer 1240, inverse wavelet transformer 1241, reconstructor 1242, video decoder 1243, and color converter 1244.

Demultiplexer 1231 obtains the compressed bitstream and separates compressed data related to the base mesh, video including displacement data (also referred to as displacement bitstream), and video including attribute data (also referred to as attribute bitstream). The compressed data related to the base mesh is passed to switch 1232. Switch 1232 determines whether to perform intra decoding processing or inter decoding processing based on a parameter in the bitstream.

When the intra decoding processing is selected, the bitstream is passed to static mesh decoder 1233 that generates a quantized base mesh. Static mesh decoder 1233 is, for example, a decoder that uses the Edgebreaker algorithm to decode 3D mesh data. Static mesh decoder 1233 generates a quantized base mesh from the bitstream. The quantized base mesh generated by static mesh decoder 1233 is stored in mesh buffer 1234 for reference when the inter decoding processing is selected.

When the inter decoding processing is selected, switch 1232 passes the compressed data related to the base mesh to motion decoder 1235. Motion decoder 1235 receives a previously decoded, quantized base mesh, and decodes motion data representing a difference in coordinates of vertices between the quantized base mesh stored in mesh buffer 1234 and the current quantized base mesh. The motion data and the quantized base mesh stored in mesh buffer 1234 are used by base mesh reconstructor 1236 to reconstruct the current quantized base mesh. The quantized base mesh obtained from the inter decoding processing or the intra decoding processing is passed to inverse quantizer 1237 to obtain a decoded base mesh.

The video including the displacement data is passed to video decoder 1238 because the bitstream includes displacement data in an image format having two items of chroma information and one item of luma information. Video decoder 1238 decodes the data using a video frame decompression method. In another example, the displacement data is decoded using an arithmetic decoder. This decompressed data is passed to image unpacker 1239, which extracts wavelet coefficients associated with each vertex from the decompressed data in image format. Inverse quantizer 1240 performs inverse quantization on the quantized wavelet coefficients with three components associated with each vertex. Inverse wavelet transformer 1241 performs inverse transformation on the result to obtain finally decoded displacement data. The decoded displacement data and the decoded base mesh are passed to reconstructor 1242. Reconstructor 1242 performs subdivision of edges of the decoded base mesh, displaces vertices using the decoded displacement data, and obtains a decoded mesh.

The video including the attribute data is passed to another video decoder 1243 to obtain a decoded attribute bitstream. The decoded attribute bitstream is further processed by color converter 1244 for color space and color format conversion to obtain a decoded attribute map.

FIG. 36 is a block diagram illustrating a configuration example of the decoding device according to the present embodiment.

FIG. 36 illustrates an example of a reconstructor that obtains decoded 3D mesh 1256 from decoded base mesh 1251 and decoded displacement data 1254.

Decoded base mesh 1251 is passed to subdivider 1252.

Subdivider 1252 subdivides any two connected vertices of the entire 3D mesh by adding a new vertex between them. This process can be repeated several times to include the vertices created in the previous subdivision step in order to generate a predefined number of vertices. Each iteration of subdivision across the entire 3D mesh generates a new level of detail (LoD). Subdivided mesh 1253 and decoded displacement data 1254 are passed to displacer 1255. Displacer 1255 generates decoded 3D mesh 1256 by moving each vertex to a new position according to corresponding displacement data.

Hereinafter, subdivision will be described. Subdivision is executed by a subdivider (specifically, subdivider 1206 or subdivider 2204).

FIG. 37 is an explanatory diagram illustrating an example of subdivision.

Base mesh illustrated in (a) in FIG. 37 includes vertices A, B, and C, and connection information indicating connectivity thereof.

(b) in FIG. 37 illustrates a mesh generated by a first subdivision, in other words, a mesh after a first subdivision. In the first subdivision, the subdivider generates vertices D, E, and F, and connection information indicating connectivity thereof. The mesh generated by the subdivider is also referred to as LoD1 or the first LoD.

Vertex D of the mesh after the first subdivision is a vertex generated by subdivision based on vertices A and B. Similarly, vertex E is a vertex generated by subdivision based on vertices B and C. Vertex F is a vertex generated by subdivision based on vertices A and C.

Note that, as an example, vertex D can be a midpoint of line segment AB (in other words, edge AB) connecting vertices A and B from which vertex D was generated. Similarly, vertex E can be a midpoint of line segment AC. Vertex F can be a midpoint of line segment BC.

(c) in FIG. 37 illustrates a mesh generated by a second subdivision, in other words, a mesh after a second subdivision. In the second subdivision, the subdivider generates vertices G, H, I, J, K, L, M, N, and O, and connection information indicating connectivity thereof. The mesh generated by the subdivider is also referred to as LoD2 or the second LoD.

Vertex G of the mesh after the second subdivision is a vertex generated by subdivision based on vertices A and D. Similarly, vertex H is a vertex generated by subdivision based on vertices A and E. Vertex I is a vertex generated by subdivision based on vertices B and D. Vertex J is a vertex generated by subdivision based on vertices D and F. Vertex K is a vertex generated by subdivision based on vertices E and F. Vertex L is a vertex generated by subdivision based on vertices C and E. Vertex M is a vertex generated by subdivision based on vertices B and F. Vertex N is a vertex generated by subdivision based on vertices C and F. Vertex O is a vertex generated by subdivision based on vertices D and E.

Note that, as an example, vertex G can be a midpoint of line segment AD (in other words, edge AD) connecting vertices A and D from which vertex G was generated. Similarly, vertex H can be a midpoint of line segment AE. Vertex I can be a midpoint of line segment BD. Vertex J can be a midpoint of line segment DF. Vertex K can be a midpoint of line segment EF. Vertex L can be a midpoint of line segment CE. Vertex M can be a midpoint of line segment BF. Vertex N can be a midpoint of line segment CF. Vertex O can be a midpoint of line segment DE.

Hereinafter, the displacement of vertices will be described with reference to FIG. 38 and FIG. 39. The displacement of vertices is executed by reconstructor 2209.

FIG. 38 is an explanatory diagram illustrating an example of displacement of vertices after being displaced after subdivision. FIG. 39 is an explanatory diagram illustrating an example of vertices of an original mesh.

Base mesh illustrated in (a) in FIG. 38 includes vertices A, B, C, and Z, and connection information indicating connectivity thereof.

(b) in FIG. 38 illustrates a mesh generated by a first subdivision, in other words, a mesh after a first subdivision (i.e., a first LoD). In the first subdivision, the subdivider generates vertices S, T, U, X, or Y, and connection information indicating connectivity thereof. Vertices S, T, U, X, or Y are the same as vertices D, E, and F illustrated in (b) in FIG. 37.

(c) in FIG. 38 illustrates a mesh generated by a second subdivision, in other words, a mesh after a second subdivision (i.e., a second LoD). In the second subdivision, the subdivider generates vertices D, E, F, G, and H, and connection information indicating connectivity thereof. Vertices D, E, F, G, and H are the same as vertices G, H, I, J, K, L, M, N, or O illustrated in (c) in FIG. 37.

(d) in FIG. 38 illustrates a mesh including vertices after being displaced after subdivision. Each of vertices A, B, C, D, E, F, G, H, S, T, U, X, Y, and Z illustrated in (d) in FIG. 38 is located at a position displaced using displacement information from the position of the corresponding vertex illustrated in (c) in FIG. 38.

The original mesh illustrated in FIG. 39 is an example of a mesh input into encoding device 100, in other words, a mesh before encoding.

The mesh illustrated in FIG. 38 has a shape close to the original mesh illustrated in FIG. 39. The displacement information is generated by displacement vector calculator 1207 of encoding device 100 as information indicating displacement from vertices of the base mesh to vertices of the original mesh, so by reconstructing the mesh using the displacement information generated in this manner, a mesh having a shape close to the original mesh is generated.

Decoding device 200 can output the mesh illustrated in (d) in FIG. 38.

Next, with reference to FIG. 40 and FIG. 41, division of a mesh into submeshes will be described.

The mesh can be divided into a plurality of parts smaller than the mesh and can be encoded on a division basis. In the division of the mesh, the vertices of the mesh are divided such that the coordinates of vertices included in each division and the connectivity can be independently encoded.

FIG. 40 is an explanatory diagram illustrating an example of a mesh. FIG. 41 is an explanatory diagram illustrating an example of the division of a mesh into submeshes.

The mesh illustrated in FIG. 40 is an original mesh and may be referred to as a full mesh in contrast with the submesh.

FIG. 41 is a diagram illustrating division of the full mesh illustrated in FIG. 40 into two submeshes. For vertices A, B, and C of the full mesh (see FIG. 40), vertex A is duplicated to form vertex A1 and vertex A2, vertex B is duplicated to form vertex B1 and vertex B2, and vertex C is duplicated to form vertex C1 and vertex C2, thereby creating two submeshes (i.e., a first submesh and a second submesh) from the full mesh. The first submesh and the second submesh are meshes that can be independently decoded.

Hereinafter, packing of displacement information into image frames will be described with reference to FIG. 42, FIG. 43, and FIG. 44.

FIG. 42, FIG. 43, and FIG. 44 are explanatory diagrams each illustrating an example of packing of displacement information into an image frame. Note that an image frame can also be rephrased as a video frame.

The displacement data of vertices is encoded as image frame data by being mapped, for example, to each component of an image frame in YUV format (i.e., the Y component (Y Plane), the U component (U Plane), and the V component (V Plane), respectively). This case will be described below as an example. Note that as another example, the displacement data of vertices may be encoded as image frame data by being mapped to each component of an image frame in RGB format (the R component, the G component, and the B component, respectively).

Decoding device 200 can use an image encoding module to extract the displacement data. The displacement data may be in the form of an X component, a Y component, or a Z component in a global coordinate system (e.g., a Cartesian coordinate system), or a normal, a tangent, or a bitangent component in a local coordinate system. Methods for mapping the displacement data to an image frame include the following methods.

For example, in a first method, the displacement data is arranged in scanning order in an image frame. An example of packing of the displacement data in this case is illustrated in FIG. 42. The displacement data is directly mapped to an image frame according to a predefined scanning order.

Note that, because the image frame has a fixed height and width, the displacement data may not fit exactly into the frame. In such cases, the remaining portion of the image frame is padded with padding data (also referred to as padded data) (see FIG. 42).

For example, in a second method, the displacement data is separated into a plurality of LoDs and mapped to the Y component, U component, and V component of an image frame. An example of packing of the displacement data in this case is illustrated in FIG. 43. Here, the displacement data of the image frame of the next one LoD starts immediately after the displacement data of the previous LoD ends. Similar to the first method, when the displacement data does not fit exactly into the image frame, the end portion of the image frame is padded (see FIG. 43).

For example, in a third method, the displacement data corresponding to the LoD is mapped to the Y component, U component, and V component of an image frame in a manner different from that in the second method. An example of packing of the displacement data in this case is illustrated in FIG. 44. In this manner, each LoD can be decoded independently. In the third method, intermediate padding is performed on the displacement data of each LoD, and CTU alignment is performed together with padding at the end of the video frame (see FIG. 44).

### <Other Examples>

Although the aspects of the encoding device and the decoding device have thus far been described according to the embodiment, the aspects of the encoding device and the decoding device are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing the decoding device to perform decoding processing may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

In the above embodiment, each element may be configured using dedicated hardware, or may be implemented by executing a software program suitable for the element. Each element may be implemented by a program execution unit such as a CPU or processor reading and executing a software program recorded on a recording medium such as a hard disk or semiconductor memory. Here, software that implements the encoding device according to the above embodiment is a program as follows.

Stated differently, the software is a program that causes a computer to execute an encoding method including: obtaining a first frame to be encoded; and encoding first data using referencing of second data, the first data included in the first frame and including one or more layers, the second data included in a second frame and including one or more layers, wherein the encoding of the first data includes: for each layer among the one or more layers included in the first data, determining one process among a plurality of processes, using a value indicating the layer and a value related to the one or more layers included in the second data, and executing the one process determined on the first data of the layer.

Software that implements the decoding device according to the above embodiment is a program as follows.

Stated differently, the software is a program that causes a computer to execute a decoding method including: obtaining a first frame to be decoded; and decoding first data using referencing of second data, the first data included in the first frame and including one or more layers, the second data included in a second frame and including one or more layers, wherein the decoding of the first data includes: for each layer among the one or more layers included in the first data, determining one process among a plurality of processes, using a value indicating the layer and a value related to the one or more layers included in the second data, and executing the one process determined on the first data of the layer.

Next, the configuration of the encoding device in a case of dividing a mesh into a plurality of submeshes will be described.

FIG. 45 illustrates a configuration example of an encoding device in a case of dividing into a plurality of submeshes. FIG. 45 illustrates a configuration example of a preprocessor.

Input mesh 1401 that is input is divided into a plurality of submeshes 1402. Input mesh 1401 is, for example, a full mesh. Each of the plurality of submeshes 1402 is input to encoding device 1400 illustrated in FIG. 45. Stated differently, the encoding processing by encoding device 1400 is performed after input mesh 1401 is divided into a plurality of submeshes 1402.

As illustrated in FIG. 45, encoding device 1400 includes preprocessor 1404 and compressor 1408.

Encoding device 1400 reads, from among the plurality of submeshes 1402, one submesh 1402 corresponding to encoding device 1400 and attribute map 1403, and passes them to preprocessor 1404. Preprocessor 1404 processes submesh 1402 to extract base mesh 1405 and displacement data 1406.

As illustrated in FIG. 46, preprocessor 1404 includes base mesh generator 1411, subdivider 1412, and displacement generator 1413.

Base mesh generator 1411 generates a base mesh based on a mesh or submesh 1402.

Subdivider 1412 subdivides the base mesh using a predetermined method to generate a subdivided mesh (Subdivided Mesh, Subdivided Base Mesh).

Displacement generator 1413 generates displacement data 1406 based on the subdivided mesh (SubDivided Mesh) and submesh 1402. The displacement data is, for example, a difference vector between an input mesh (submesh 1402) and a subdivided mesh.

Note that the decoding device also uses the same method for subdivision as encoding device 1400. The subdivision method or parameters in encoding device 1400 may be transmitted to decoding device 1420. Stated differently, the subdivision method or parameters may be included in the bitstream.

Attribute map 1403 is passed to compressor 1408 together with base mesh 1405 and displacement data 1406 generated by preprocessor 1404.

Compressor 1408 compresses base mesh 1405, displacement data 1406, and attribute map 1403 to generate bitstream 1409. Compressor 1408 can transmit additional information to decoding device 1420 by further including metadata 1407 in bitstream 1409.

Next, the configuration of the decoding device in a case of dividing into a plurality of submeshes will be described.

FIG. 47 illustrates a configuration example of a decoding device in a case of dividing into a plurality of submeshes.

As illustrated in FIG. 47, decoding device 1420 includes decompressor 1422 and postprocessor 1427.

Decoding device 1420 reads bitstream 1421 and passes it to decompressor 1422. Decompressor 1422 decompresses base mesh 1423, displacement data 1424, and attribute map 1426 from bitstream 1421, and passes them to postprocessor 1427. One example of displacement data 1424 is displacement vectors.

Postprocessor 1427 processes base mesh 1423 according to displacement data 1424 and attribute map 1426 to generate merge submesh 1428. Postprocessor 1427 may further use information from metadata 1425 to generate merge submesh 1428.

In postprocessor 1427, reconstruction of a deformed mesh (subdivision, displacement unit) is performed. In postprocessor 1427, in subdivision, for each decoded submesh, the base mesh is subdivided, displacement vectors are added to the subdivided base mesh, and the submesh is restored. Stated differently, in postprocessor 1427, processing of the reconstructed deformed mesh is performed for each submesh. The plurality of restored submeshes are merged, and the mesh prior to division is reconstructed.

FIG. 48 is a diagram for explaining post-decoding processing.

Decoder 1432 obtains bitstream 1431 and performs decoding processing. After the decoding processing, processing by post-decoder 1433 may be executed.

Processing in post-decoder 1433 is optionally performed depending on the application. Post-decoder 1433 converts decoded data to a nominal format, for example, like video conversion from YUV space to RGB space. Post-decoder 1433 includes pre-reconstructor 1434, reconstructor 1435, post-reconstructor 1436, and adapter 1437. Stated differently, in post-decoding, a plurality of processes by pre-reconstructor 1434, reconstructor 1435, post-reconstructor 1436, and adapter 1437 are encapsulated.

Pre-reconstructor 1434 scales up normalized texture coordinates, for example, to match the dimensions of a texture image, in the context of video-based dynamic mesh coding.

Reconstructor 1435 performs reconstruction processing on, for example, decoded atlas frames, decoded base mesh frames, decoded video frames, and syntax elements related to the same mesh sequence. The output of this processing is a sequence of mesh frames reconstructed prior to the post-reconstruction step.

Post-reconstructor 1436 performs a number of smoothing operations on, for example, reconstructed mesh frames, in the context of video-based dynamic mesh coding. The smoothing operations include edge collapsing or addition of new vertices.

Adapter 1437 is applied by some application to adapt the reconstructed mesh to a predetermined scenario. For example, the vertices of the reconstructed mesh are converted from a three-dimensional model coordinate system to a three-dimensional world coordinate system.

FIG. 49 is a flowchart illustrating an example of decoding processing of a three-dimensional mesh. FIG. 50 illustrates an example of different two-dimensional planes. FIG. 51 and FIG. 52 illustrate an example of three-dimensional rotation of a set of vertex coordinates around the z-axis. FIG. 53 illustrates an example of projecting vertex coordinates onto a two-dimensional plane. FIG. 54 illustrates an example of upscaling a set of two-dimensional coordinates. Note that in FIG. 50, the mesh has two-dimensional planes A through F.

Decoding device 1420 decodes a set of vertex coordinates 1500 from a bitstream (S1501). This set of vertex coordinates represents the three-dimensional coordinates of the mesh, and is obtained by converting a set of vertex coordinates expressed in floating-point to fixed-point values. The set of vertex coordinates is decoded from a bitstream. The conversion from vertex coordinates expressed in floating-point to fixed-point is performed by multiplying a set of vertex coordinates expressed in floating-point by a predetermined conversion parameter. This predetermined conversion parameter may be, for example, 2 to the 8th power, 2 to the 10th power, or 2 to the 16th power. The mesh may be a full mesh or a submesh.

Decoding device 1420 decodes an upscale parameter and a downscale parameter from a bitstream (S1502). The upscale parameter is a parameter relating to upscaling processing, and the downscale parameter is a parameter relating to downscaling processing. The upscale parameter and the downscale parameter may be decoded from a header of the bitstream. The header may be supplemental enhancement information (SEI). The upscale parameter and the downscale parameter may be integer values or powers of two.

Decoding device 1420 derives a set of two-dimensional coordinates based on a set of vertex coordinates (S1503). This set of two-dimensional coordinates is a set obtained by projecting a set of vertex coordinates onto a two-dimensional plane. The set of vertex coordinates may be rotated (three-dimensional rotation) in three-dimensional space before being projected onto a two-dimensional plane. For example, the set of vertex coordinates 1500 illustrated in FIG. 51 may be rotated 90 degrees counterclockwise about a rotation axis parallel to the z-axis and converted to the set of vertex coordinates 1501 illustrated in FIG. 52. The parameter (rotation angle) used for this three-dimensional rotation may be decoded from the bitstream. As illustrated in FIG. 53, the set of vertex coordinates 1501 that has been three-dimensionally rotated may be converted to the set of two-dimensional coordinates 1502 by being projected onto the x-z plane. The parameter (projection direction) used for projection may be decoded from the bitstream.

Decoding device 1420 derives a set of two-dimensional coordinates scaled (enlarged or reduced) using an upscale parameter (S1504). This set of two-dimensional coordinates is a set obtained by being multiplied by the upscale parameter. As illustrated in FIG. 54, the set of two-dimensional coordinates 1502 may be converted to the set of two-dimensional coordinates 1503 by being multiplied by the upscale parameter "2" and enlarged. Note that when the upscale parameter is "1", the set of scaled two-dimensional coordinates is the same as the original set of two-dimensional coordinates. The upscale parameter cannot take a value of "0". Note that the upscale parameter is a value greater than 1, since it is a parameter used to enlarge the original value by being multiplied by the original value.

Decoding device 1420 derives a scaled width and height by combining a downscale parameter with a predetermined width and height (S1505). This process includes at least one mathematical operation. For example, the scaled width or height may be the sum of the predetermined width or height and the downscale parameter. For example, the scaled width or height may be the product of the predetermined width or height and two raised to the power of the downscale parameter. The predetermined width and height may be decoded from the bitstream. The predetermined width or height may be a fixed value.

Decoding device 1420 derives a set of three-dimensional coordinates using a set of scaled two-dimensional coordinates (S1506). In this processing, decoding device 1420 normalizes the set of two-dimensional coordinates using the scaled width and height, and introduces a coordinate value of the third axis having a value of 1 into the normalized two-dimensional coordinates. Stated differently, decoding device 1420 calculates coordinates extended to three dimensions by adding a coordinate value of the third axis to the two-dimensional coordinates. This normalization may be performed by division or a right bit shift. The normalized two-dimensional coordinates are converted to coordinates expressed in floating-point, and a coordinate value of the third axis having a value of "1" is added before deriving the three-dimensional coordinates. This conversion to coordinates expressed in floating-point is performed by dividing the normalized two-dimensional coordinates by a predetermined conversion parameter.

Decoding device 1420 reconstructs a three-dimensional mesh using a set of three-dimensional coordinates (S1507). This set of three-dimensional coordinates is used for mapping a texture to vertices of a three-dimensional mesh.

FIG. 55 is a flowchart illustrating an example of the scaling processing of step S1505 and the normalization processing of step S1506. Here, the predetermined width and height may be indices of powers of two. The downscale parameter and the upscale parameter may also be indices of powers of two.

Decoding device 1420 calculates a scaled width and height by adding a downscale parameter to a predetermined width and a predetermined height, respectively (S1511).

Decoding device 1420 derives a set of three-dimensional coordinates by right bit-shifting the x-axis coordinates and y-axis coordinates of the set of scaled two-dimensional coordinates (S1512). More specifically, decoding device 1420 derives the x-axis coordinates of the set of three-dimensional coordinates by right bit-shifting the x-axis of the set of scaled two-dimensional coordinates by the scaled width. At this time, decoding device 1420 adds (1 << (scaled width - 1)) as an offset before the bit shift. Similarly, decoding device 1420 derives the y-axis coordinates of the set of three-dimensional coordinates by right bit-shifting the y-axis of the set of scaled two-dimensional coordinates by the scaled height. At this time, decoding device 1420 adds (1 << (scaled height - 1)) as an offset before the bit shift. Decoding device 1420 sets the z-axis coordinates of all three-dimensional coordinates in the set of three-dimensional coordinates to "1".

FIG. 56 is a flowchart illustrating another example of the scaling processing of step S1505 and the normalization processing of step S1506.

Decoding device 1420 calculates a scaled width and height by multiplying a predetermined width and a predetermined height by a downscale parameter, respectively (S1521). Note that the downscale parameter is a value less than 1, since it is a parameter used in downscaling processing and is a parameter used to reduce the original value by being multiplied by the original value. Therefore, the downscale parameter may be expressed as a fraction less than 1.

Decoding device 1420 derives a set of three-dimensional coordinates from the x-axis coordinates and y-axis coordinates of the set of scaled two-dimensional coordinates (S1522). More specifically, decoding device 1420 derives the x-axis coordinates of the set of three-dimensional coordinates by dividing the x-axis coordinates of the set of scaled two-dimensional coordinates by the scaled width. Similarly, decoding device 1420 derives the y-axis coordinates of the set of three-dimensional coordinates by dividing the y-axis coordinates of the set of scaled two-dimensional coordinates by the scaled height. Decoding device 1420 sets the z-axis coordinates of all three-dimensional coordinates in the set of three-dimensional coordinates to "1".

Note that the upscaling processing and the downscaling processing in the scaling processing may be performed together. Stated differently, the scaling processing may be performed with the upscale parameter and the downscale parameter combined. The upscale parameter is a value greater than 1, and the downscale parameter is expressed as a value less than 1. The scaling ratio due to the upscaling processing and the downscaling processing included in the scaling processing may be expressed as a combination of the upscale parameter and the downscale parameter, where the upscale parameter may represent the numerator of the scaling ratio and the downscale parameter may represent the denominator of the scaling ratio.

FIG. 57 is a flowchart illustrating a variation of step S1505. Stated differently, decoding device 1420 may execute steps S1531 to S1533 illustrated in FIG. 57 instead of step S1505. FIG. 58 illustrates an example of two-dimensional rotation.

By executing steps S1531 to S1533, decoding device 1420 derives a set of three-dimensional coordinates using a set of scaled two-dimensional coordinates.

Decoding device 1420 rotates (two-dimensional rotation) the set of scaled two-dimensional coordinates in a two-dimensional space using a rotation angle before normalizing the set by the scaled width and the scaled height (S1531). As illustrated in FIG. 58, the set of two-dimensional coordinates 1512 may be obtained by rotating the set of scaled two-dimensional coordinates 1511 90 degrees to the right. The rotation angle is decoded from a bitstream. Stated differently, the rotation angle may be a value determined by encoding device 1400. For example, when the rotation angle is 90 degrees, the y-axis of the set of scaled two-dimensional coordinates is inverted, and the x-axis coordinates and the y-axis coordinates are swapped.

Next, decoding device 1420 normalizes the set of scaled two-dimensional coordinates using the scaled width and the scaled height, and derives a set of three-dimensional coordinates (S1532). This normalization may be performed by division or a right bit shift.

Furthermore, decoding device 1420 converts the normalized and scaled two-dimensional coordinates into three-dimensional coordinates by introducing a coordinate value of the third axis having a value of 1 (S1533). Note that the two-dimensional coordinates and the three-dimensional coordinates may be expressed as integer values.

FIG. 59 is a flowchart illustrating another variation of step S1505. Stated differently, decoding device 1420 may execute steps S1541 to S1543 illustrated in FIG. 59 instead of step S1505. FIG. 60 illustrates an example of shift processing (translation processing) on a set of two-dimensional coordinates.

Decoding device 1420 derives a set of three-dimensional coordinates using a set of scaled two-dimensional coordinates (S1541). At this time, the set of scaled two-dimensional coordinates is adjusted before being normalized by the scaled width and the scaled height. This adjustment processing is a numerical operation, and the numerical operations include addition, subtraction, displacement, and shift processing. A set of parameters is used in this processing. The set of parameters is decoded from a bitstream.

Next, decoding device 1420 normalizes the set of scaled two-dimensional coordinates using the scaled width and the scaled height, and derives a set of three-dimensional coordinates (S1542). This normalization may be performed by division or a right bit shift operation.

Furthermore, decoding device 1420 converts the normalized two-dimensional coordinates into three-dimensional coordinates by introducing a coordinate value of the third axis having a value of 1 (S1543). Note that the two-dimensional coordinates and the three-dimensional coordinates may be expressed as integer values.

For example, as illustrated in FIG. 60, the set of scaled two-dimensional coordinates 1521 is shifted from one position to another position within bounding box 1523. As a result, the set of two-dimensional coordinates 1521 is converted to the set of two-dimensional coordinates 1522. The shift amount of this shift may be specified by an x-axis offset amount and a y-axis offset amount. The x-axis offset amount and the y-axis offset amount are included in a set of parameters, and may be set to the same value as each other or may be set to different values from each other.

The examples illustrated in FIG. 59 and FIG. 60 may be executed by combining at least some aspects of S1505 at least partially.

As described above, the plurality of two-dimensional coordinates may be scaled, rotated, or shifted on a two-dimensional plane. At least two or more of scaling, rotation, and shift may also be performed on the plurality of two-dimensional coordinates. Stated differently, at least one two-dimensional transformation of scaling, rotation, or shift may be performed on the plurality of two-dimensional coordinates, and the plurality of two-dimensional coordinates after the two-dimensional transformation are used for texture mapping. Stated differently, the plurality of two-dimensional coordinates after the two-dimensional transformation indicate a region in a two-dimensional image including a texture, the region being a region that includes the texture mapped to the three-dimensional mesh corresponding to the plurality of two-dimensional coordinates. The texture is included in the two-dimensional image.

This two-dimensional image includes, in a region identified by the plurality of two-dimensional coordinates after the two-dimensional transformation, a texture mapped to the three-dimensional mesh corresponding to the plurality of two-dimensional coordinates. The two-dimensional image may have a plurality of textures mapped to a plurality of meshes. The plurality of two-dimensional coordinates after the two-dimensional transformation may be set such that regions of the plurality of textures corresponding to the plurality of meshes are set to regions that do not overlap each other, and regions on the two-dimensional image where nothing is set are minimized. Stated differently, the two-dimensional transformation may be executed with parameters set so as to satisfy that regions of the plurality of textures corresponding to the plurality of meshes are set to regions that do not overlap each other, and that regions on the two-dimensional image where nothing is set are minimized.

FIG. 61 illustrates an example of syntax in the present disclosure. In this example of syntax, an upscale parameter and a downscale parameter are included.

FIG. 62 illustrates another example of syntax in the present disclosure. In this example of syntax, various parameters are included, such as a predetermined width, a predetermined height, parameters for three-dimensional rotation, projection parameters, a rotation angle, a set of parameters, an upscale parameter, and a downscale parameter. The various parameters may include at least some of a predetermined width, a predetermined height, parameters for three-dimensional rotation, projection parameters, a rotation angle, a set of parameters, an upscale parameter, and a downscale parameter, and need not include all of them.

FIG. 63 is a flowchart illustrating an example of encoding processing of a three-dimensional mesh.

Encoding device 1400 encodes a set of vertex coordinates into a bitstream (S1551). This set of vertex coordinates represents the three-dimensional coordinates of the mesh. The mesh may be a full mesh or a submesh.

Encoding device 1400 encodes an upscale parameter and a downscale parameter into a bitstream (S1552). The upscale parameter and the downscale parameter may be encoded into a header of the bitstream. The header may be supplemental enhancement information (SEI). The upscale parameter and the downscale parameter may be integer values.

Encoding device 1400 derives a set of two-dimensional coordinates based on a set of vertex coordinates (S1553). This set of two-dimensional coordinates is a set obtained by projecting a set of vertex coordinates onto a two-dimensional plane. Encoding device 1400 may convert the set of two-dimensional coordinates to coordinates expressed in fixed-point. The conversion from vertex coordinates expressed in floating-point to fixed-point is performed by multiplying a set of vertex coordinates expressed in floating-point by a predetermined conversion parameter. This predetermined conversion parameter may be, for example, 2 to the 8th power, 2 to the 10th power, or 2 to the 16th power. The set of vertex coordinates may be rotated (three-dimensional rotation) in three-dimensional space before being projected onto a two-dimensional plane. The rotation angle in this three-dimensional space may be encoded into the bitstream. The parameter (projection direction) used for projection may be encoded into the bitstream. Step S1553 corresponds to step S1503.

Encoding device 1400 derives a set of two-dimensional coordinates scaled (enlarged or reduced) using an upscale parameter (S1554). This set of two-dimensional coordinates is a set obtained by being multiplied by the upscale parameter. Step S1554 corresponds to step S1504.

Encoding device 1400 derives a scaled width and height by combining a downscale parameter with a predetermined width and height (S1555). This process includes at least one mathematical operation. For example, the scaled width or height may be the sum of the predetermined width or height and the downscale parameter. For example, the scaled width or height may be the product of the predetermined width or height and two raised to the power of the downscale parameter. The predetermined width and height may be encoded into the bitstream. The predetermined width or height may be a fixed value. Step S1555 corresponds to step S1505.

Encoding device 1400 derives a set of three-dimensional coordinates using a set of scaled two-dimensional coordinates (S1556). In this processing, encoding device 1400 normalizes the set of two-dimensional coordinates using the scaled width and height, and introduces a coordinate value of the third axis having a value of 1 into the normalized two-dimensional coordinates. Stated differently, encoding device 1400 calculates coordinates extended to three dimensions by adding a coordinate value of the third axis to the two-dimensional coordinates. This normalization may be performed by division or a right bit shift. The normalized two-dimensional coordinates are converted to coordinates expressed in floating-point, and a coordinate value of the third axis having a value of "1" is added before deriving the three-dimensional coordinates. This conversion to coordinates expressed in floating-point is performed by dividing the normalized two-dimensional coordinates by a predetermined conversion parameter. Step S1556 corresponds to step S1506.

The plurality of two-dimensional coordinates after the two-dimensional transformation indicate a region in a two-dimensional image including a texture, the region being a region to which the texture of the three-dimensional mesh corresponding to the plurality of two-dimensional coordinates is mapped. The texture is included in the two-dimensional image.

This two-dimensional image includes, in a region identified by the plurality of two-dimensional coordinates after the two-dimensional transformation, a region to which the texture of the three-dimensional mesh corresponding to the plurality of two-dimensional coordinates is mapped. The two-dimensional image may have a plurality of textures mapped from a plurality of meshes. The plurality of two-dimensional coordinates after the two-dimensional transformation may be set such that regions of the plurality of textures corresponding to the plurality of meshes are set to regions that do not overlap each other, and regions on the two-dimensional image where nothing is set are minimized. Stated differently, the two-dimensional transformation may be executed with parameters set so as to satisfy that regions of the plurality of textures corresponding to the plurality of meshes are set to regions that do not overlap each other, and that regions on the two-dimensional image where nothing is set are minimized.

### (Configuration Example)

FIG. 64 illustrates an example of a configuration of the encoding device according to the embodiment. FIG. 65 is a flowchart illustrating an example of an encoding method performed by the encoding device according to the embodiment.

Encoding device 1530 includes circuit 1531 and memory 1532 connected to circuit 1531. Encoding device 1530 is a device that implements encoding device 1400.

Circuit 1531 performs the following operations.

Circuit 1531 obtains a plurality of vertices included in a three-dimensional mesh (S1561). Circuit 1531 generates a plurality of two-dimensional coordinates by projecting the plurality of vertices onto a two-dimensional plane (S1562). Circuit 1531 performs a two-dimensional transformation on the plurality of two-dimensional coordinates based on a parameter (S1563). Circuit 1531 generates a bitstream including the parameter (S1564). The plurality of two-dimensional coordinates after the two-dimensional transformation are used for mapping a texture to the three-dimensional mesh.

With this, since a bitstream including a parameter as information for identifying a region of a two-dimensional image to which a texture of the three-dimensional mesh is mapped is generated, decoding device 1540 (described later) that obtains the bitstream can identify the region of the texture to be mapped to the three-dimensional mesh based on the plurality of vertices and the parameter.

For example, the two-dimensional transformation includes a process of scaling the plurality of two-dimensional coordinates. The parameter includes a scaling ratio. The scaling ratio is, for example, an upscale parameter or a downscale parameter.

With this, since the scaling ratio of the plurality of two-dimensional coordinates can be notified to decoding device 1540, decoding device 1540 can identify the region of the texture to be mapped to the three-dimensional mesh.

For example, the two-dimensional transformation includes a process of shifting positions of the plurality of two-dimensional coordinates. The parameter includes an offset amount in the shifting.

With this, since the offset amount in the shifting of the plurality of two-dimensional coordinates can be notified to decoding device 1540, decoding device 1540 can identify the region of the texture to be mapped to the three-dimensional mesh.

For example, the two-dimensional transformation includes a process of two-dimensionally rotating the plurality of two-dimensional coordinates. The parameter includes a rotation angle of the two-dimensional rotation.

With this, since the rotation angle of the two-dimensional rotation of the plurality of two-dimensional coordinates can be notified to decoding device 1540, decoding device 1540 can identify the region of the texture to be mapped to the three-dimensional mesh.

For example, the projecting in step S1562 includes performing three-dimensional rotation on the three-dimensional mesh in a three-dimensional space, and projecting the three-dimensional mesh after the three-dimensional rotation onto the two-dimensional plane. The bitstream includes a rotation angle of the three-dimensional rotation.

With this, since the rotation angle of the three-dimensional rotation of the three-dimensional mesh can be notified to decoding device 1540, decoding device 1540 can identify the region of the texture to be mapped to the three-dimensional mesh.

For example, the scaling ratio includes at least one of an upscale parameter used for upscaling processing or a downscale parameter used for downscaling processing.

For example, the scaling ratio is represented by a fraction having the upscale parameter as the numerator and the downscale parameter as the denominator.

For example, at least one of the upscale parameter or the downscale parameter is an integer.

For example, at least one of the upscale parameter or the downscale parameter is a power of two.

FIG. 66 illustrates an example of a configuration of the decoding device according to the embodiment. FIG. 67 is a flowchart illustrating an example of a decoding method performed by the decoding device according to the embodiment.

Decoding device 1540 includes circuit 1541 and memory 1542 connected to circuit 1541. Decoding device 1540 is a device that implements decoding device 1420.

Circuit 1541 performs the following operations.

Circuit 1541 obtains a bitstream (S1541). Circuit 1541 obtains a plurality of vertices included in a three-dimensional mesh and a parameter from the bitstream (S1542). Circuit 1541 generates a plurality of two-dimensional coordinates by projecting the plurality of vertices onto a two-dimensional plane (S1543). Circuit 1541 performs a two-dimensional transformation on the plurality of two-dimensional coordinates based on the parameter (S1544). The plurality of two-dimensional coordinates after the two-dimensional transformation are used for mapping a texture to the three-dimensional mesh.

With this, since a parameter as information for identifying a region of the texture to be mapped to the three-dimensional mesh is obtained from the bitstream including the parameter, decoding device 1540 that obtains the bitstream can identify the region of the texture to be mapped to the three-dimensional mesh based on the plurality of vertices and the parameter.

For example, the two-dimensional transformation includes a process of scaling the plurality of two-dimensional coordinates. The parameter includes a scaling ratio. The scaling ratio is, for example, an upscale parameter or a downscale parameter.

With this, since the scaling ratio of the plurality of two-dimensional coordinates can be obtained, the region of the texture to be mapped to the three-dimensional mesh can be identified.

For example, the two-dimensional transformation includes a process of shifting positions of the plurality of two-dimensional coordinates. The parameter includes an offset amount in the shifting.

With this, since the offset amount in the shifting of the plurality of two-dimensional coordinates can be obtained, the region of the texture to be mapped to the three-dimensional mesh can be identified.

For example, the two-dimensional transformation includes a process of two-dimensionally rotating the plurality of two-dimensional coordinates. The parameter includes a rotation angle of the two-dimensional rotation.

With this, since the rotation angle of the two-dimensional rotation of the plurality of two-dimensional coordinates can be obtained, the region of the texture to be mapped to the three-dimensional mesh can be identified.

For example, the projecting includes performing three-dimensional rotation on the three-dimensional mesh in a three-dimensional space, and projecting the three-dimensional mesh after the three-dimensional rotation onto the two-dimensional plane. The bitstream includes a rotation angle of the three-dimensional rotation.

With this, since the rotation angle of the three-dimensional rotation of the three-dimensional mesh can be obtained, the region of the texture to be mapped to the three-dimensional mesh can be identified.

For example, the scaling ratio includes at least one of an upscale parameter used for upscaling processing or a downscale parameter used for downscaling processing.

For example, the scaling ratio is represented by a fraction having the upscale parameter as the numerator and the downscale parameter as the denominator.

For example, at least one of the upscale parameter or the downscale parameter is an integer.

For example, at least one of the upscale parameter or the downscale parameter is a power of two.

The encoding device and the decoding device according to the present disclosure may be able to reduce the length of peripheral information for signal transmission. The complexity of the decoding processing may also be able to be reduced.

The encoding device and the decoding device according to the present disclosure may also be implemented by combining at least a part of other aspects. Furthermore, the configuration or processing of the encoding device and the decoding device according to the present disclosure may be implemented by combining a part of the processing shown in any of the flowcharts according to the present aspect, a part of the configuration of any of the devices, a part of the syntax, or the like with other aspects.

Processing by the decoding device according to the present disclosure may also be similarly executed in the encoding device.

Not all of the elements described in the present aspect are always necessary; it is sufficient if only a portion of the elements of the encoding device and the decoding device according to the present disclosure are included.

### [Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

### [Reference Signs List]

100 encoding device
101, 121, 144 vertex information encoder
102, 145 connection information encoder
103, 122 attribute information encoder
104, 204, 1103 preprocessor
105, 205, 2106 postprocessor
110 three-dimensional data encoding system
111, 211 controller
112, 212 input/output processor
113 three-dimensional data encoder
114 system multiplexer
115 three-dimensional data generator
123 metadata encoder
124 multiplexer
131 vertex image generator
132 attribute image generator
133 metadata generator
134 video encoder
141 two-dimensional data encoder
142 mesh data encoder
143 texture encoder
148 description encoder
151, 251 circuit
152, 252 memory
200 decoding device
201, 221, 244 vertex information decoder
202, 245 connection information decoder
203, 222 attribute information decoder
210 three-dimensional data decoding system
213 three-dimensional data decoder
214 system demultiplexer
215, 247 presenter
216 user interface
223 metadata decoder
224 demultiplexer
231 vertex information generator
232 attribute information generator
234 video decoder
241 two-dimensional data decoder
242 mesh data decoder
243 texture decoder
246 mesh reconstructor
248 description decoder
300 network
310 external connector
613 base mesh decoder
614 displacement decoder
615 attribute decoder
616 decoder of other type
617 three-dimensional reconstructor
631 frame header decoder
632 vertex geometry coordinate predictor
633 vertex geometry coordinate difference decoder
634 reconstructor
1231 demultiplexer
1232 switch
1233 static mesh decoder
1234 mesh buffer
1235 motion decoder
1236 base mesh reconstructor
1237 inverse quantizer
1238, 1243 video decoder
1239 image unpacker
1240 inverse quantizer
1241 inverse wavelet transformer
1242 reconstructor
1244 color converter
1251 decoded base mesh
1252 subdivider
1253 subdivided mesh
1254 decoded displacement data
1255 displacer
1256 decoded 3D mesh
1400 encoding device
1401 input mesh
1402 submesh
1403, 1426 attribute map
1404 preprocessor
1405, 1423 base mesh
1406, 1424 displacement data
1407, 1425 metadata
1408 compressor
1409, 1421, 1431 bitstream
1411 base mesh generator
1412 subdivider
1413 displacement generator
1420 decoding device
1422 decompressor
1427 postprocessor
1428 merge submesh
1429 output mesh
1432 decoder
1433 post-decoder
1434 pre-reconstructor
1435 reconstructor
1436 post-reconstructor
1437 adapter
1438 final three-dimensional mesh frame
1500, 1501 set of vertex coordinates
1502, 1503, 1511, 1512, 1521, 1522 set of two-dimensional coordinates
1523 bounding box
1530 encoding device
1531, 1541 circuit
1532, 1542 memory
1540 decoding device
4801, 5701, 11001decimator
4802, 5702, 11002subdivider
4803, 5703, 11003displacement vector calculator
4804, 5704, 11004wavelet transformer
4805 inter predictor
4806, 5706, 11006quantizer
4807, 5708, 11008image packer
4808, 5709, 11009video encoder
4811, 5003, 5711, 5805, 11011inverse quantizer
4812, 5004, 5006, 5712, 5806, 5808, 11012 reconstructor
4813, 5713, 11013, 5811reference buffer
5001, 5801, 11021video decoder
5002, 5802, 11022image unpacker
5005, 5807 inverse wavelet transformer
5705, 11005 LoD-based inter predictor
5707, 5804, 11007, 11024 switch
5710, 11010arithmetic encoder
5803, 11023arithmetic decoder

## Claims

1. An encoding method comprising:
obtaining a plurality of vertices included in a three-dimensional mesh;
generating a plurality of two-dimensional coordinates by projecting the plurality of vertices onto a two-dimensional plane;
performing a two-dimensional transformation on the plurality of two-dimensional coordinates based on a parameter; and
generating a bitstream including the parameter, wherein
the plurality of two-dimensional coordinates after the two-dimensional transformation are used for mapping a texture of the three-dimensional mesh.

2. The encoding method according to claim 1, wherein
the two-dimensional transformation includes a process of scaling the plurality of two-dimensional coordinates, and
the parameter includes a scaling ratio.

3. The encoding method according to claim 1, wherein
the two-dimensional transformation includes a process of shifting positions of the plurality of two-dimensional coordinates, and
the parameter includes an offset amount in the shifting.

4. The encoding method according to claim 1, wherein
the two-dimensional transformation includes a process of performing two-dimensional rotation on the plurality of two-dimensional coordinates, and
the parameter includes a rotation angle of the two-dimensional rotation.

5. The encoding method according to any one of claims 1 to 4, wherein
the projecting includes performing three-dimensional rotation on the three-dimensional mesh in a three-dimensional space, and projecting the three-dimensional mesh after the three-dimensional rotation onto the two-dimensional plane, and
the bitstream includes a rotation angle of the three-dimensional rotation.

6. The encoding method according to claim 2, wherein
the scaling ratio includes at least one of an upscale parameter used for upscaling processing or a downscale parameter used for downscaling processing.

7. The encoding method according to claim 6, wherein
the scaling ratio is represented by a fraction having the upscale parameter as a numerator and the downscale parameter as a denominator.

8. The encoding method according to claim 6 or 7, wherein
at least one of the upscale parameter or the downscale parameter is an integer.

9. The encoding method according to claim 6 or 7, wherein
at least one of the upscale parameter or the downscale parameter is a power of two.

10. A decoding method comprising:
obtaining a bitstream;
obtaining, from the bitstream, a plurality of vertices included in a three-dimensional mesh and a parameter;
generating a plurality of two-dimensional coordinates by projecting the plurality of vertices onto a two-dimensional plane; and
performing a two-dimensional transformation on the plurality of two-dimensional coordinates based on the parameter, wherein
the plurality of two-dimensional coordinates after the two-dimensional transformation are used for mapping a texture to the three-dimensional mesh.

11. The decoding method according to claim 10, wherein
the two-dimensional transformation includes a process of scaling the plurality of two-dimensional coordinates, and
the parameter includes a scaling ratio.

12. The decoding method according to claim 10, wherein
the two-dimensional transformation includes a process of shifting positions of the plurality of two-dimensional coordinates, and
the parameter includes an offset amount in the shifting.

13. The decoding method according to claim 10, wherein
the two-dimensional transformation includes a process of performing two-dimensional rotation on the plurality of two-dimensional coordinates, and
the parameter includes a rotation angle of the two-dimensional rotation.

14. The decoding method according to any one of claims 10 to 13, wherein
the projecting includes performing three-dimensional rotation on the three-dimensional mesh in a three-dimensional space, and projecting the three-dimensional mesh after the three-dimensional rotation onto the two-dimensional plane, and
the bitstream includes a rotation angle of the three-dimensional rotation.

15. The decoding method according to claim 11, wherein
the scaling ratio includes at least one of an upscale parameter used for upscaling processing or a downscale parameter used for downscaling processing.

16. The decoding method according to claim 15, wherein
the scaling ratio is represented by a fraction having the upscale parameter as a numerator and the downscale parameter as a denominator.

17. The decoding method according to claim 15 or 16, wherein
at least one of the upscale parameter or the downscale parameter is an integer.

18. The decoding method according to claim 15 or 16, wherein
at least one of the upscale parameter or the downscale parameter is a power of two.

19. An encoding device comprising:
a circuit; and
a memory connected to the circuit, wherein
in operation, the circuit performs:
obtaining a plurality of vertices included in a three-dimensional mesh;
generating a plurality of two-dimensional coordinates by projecting the plurality of vertices onto a two-dimensional plane;
performing a two-dimensional transformation on the plurality of two-dimensional coordinates based on a parameter; and
generating a bitstream including the parameter, wherein
the plurality of two-dimensional coordinates after the two-dimensional transformation are used for mapping a texture of the three-dimensional mesh.

20. A decoding device comprising:
a circuit; and
a memory connected to the circuit, wherein
in operation, the circuit performs:
obtaining a bitstream;
obtaining, from the bitstream, a plurality of vertices included in a three-dimensional mesh and a parameter;
generating a plurality of two-dimensional coordinates by projecting the plurality of vertices onto a two-dimensional plane; and
performing a two-dimensional transformation on the plurality of two-dimensional coordinates based on the parameter, wherein
the plurality of two-dimensional coordinates after the two-dimensional transformation are used for mapping a texture to the three-dimensional mesh.
